(19) Europäisches Patentamt European Patent Office Office européen des brevets

(11) **EP 4 543 051 A1**

(12) **EUROPEAN PATENT APPLICATION**
published in accordance with Art. 153(4) EPC

(43) Date of publication:
23.04.2025 Bulletin 2025/17

(21) Application number: 23823044.5

(22) Date of filing: 09.06.2023

(51) International Patent Classification (IPC):
$H04W\ 4/02^{(2018.01)}$  $H04W\ 64/00^{(2009.01)}$

(52) Cooperative Patent Classification (CPC):
H04L 5/00; H04W 4/02; H04W 64/00

(86) International application number:
PCT/CN2023/099378

(87) International publication number:
WO 2023/241476 (21.12.2023 Gazette 2023/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.06.2022 CN 202210681976

(71) Applicant: Datang Mobile Communications
Equipment Co., Ltd.
Beijing 100085 (CN)

(72) Inventors:
• ZHANG, Bufang
  Beijing 100085 (CN)
• LI, Jianxiang
  Beijing 100085 (CN)
• TIAN, Xiaoyang
  Beijing 100085 (CN)
• QUAN, Haiyang
  Beijing 100085 (CN)

(74) Representative: Studio Torta S.p.A.
Via Viotti, 9
10121 Torino (IT)

(54) **POSITIONING INTEGRITY DETERMINATION METHOD AND APPARATUS, AND STORAGE MEDIUM**

(57) Provided in the embodiments of the present disclosure are a positioning integrity determination method and apparatus, and a storage medium. The method comprises: acquiring positioning integrity assistance information sent by means of a positioning server; and determining a positioning integrity calculation result on the basis of the positioning integrity assistance information.

```
┌─────────────────────────────────────────────────────┐
│ Obtaining positioning integrity assistance           │   101
│ information transmitted from a positioning server     │
└─────────────────────────────────────────────────────┘
                          │
                          ▼
┌─────────────────────────────────────────────────────┐
│ Determining a positioning integrity calculation      │   102
│ result based on the positioning integrity            │
│ assistance information                                │
└─────────────────────────────────────────────────────┘
```

FIG. 1

Processed by Luminess, 75001 PARIS (FR)

**Description**

CROSS-REFERENCES TO RELATED APPLICATIONS

The present application claims priority to Chinese patent application No. 2022106819764 filed on June 15, 2022, entitled "Positioning Integrity Determination Method and Apparatus, and Storage Medium", which is hereby incorporated by reference in its entirety.

FIELD

The present application relates to the field of communications, and in particular, to methods and apparatuses for determining positioning integrity, and storage media.

BACKGROUND

In all terminal-based (user equipment-based (UE-based)) downlink cellular network related positioning methods, including a downlink angle positioning method (downlink angle of departure (DL-AoD)) and a downlink time difference of arrival (DL-TDOA), a base station transmits a downlink positioning reference signal (PRS), and a terminal/UE receives the reference signal and performs measurements. The measurement values obtained by the UE are different in different positioning methods. The UE calculates position information based on the measurement values and assistance data provided by a location management function (LMF), and reports a final calculated position result to the LMF.

In the related art, both UE and network device cannot determine the reliability of positioning results.

BRIEF SUMMARY

Embodiments of the present application provide methods and apparatuses for determining positioning integrity and a storage medium, to solve a problem in related art that user equipment (UE) and network device cannot determine the reliability of positioning results, which leads to a defect of unreliable positioning, and improve position accuracy and reliability of UE-based downlink cellular network related positioning methods.

An embodiment of the present application provides a method for determining positioning integrity, performed by a terminal, including:

obtaining positioning integrity assistance information transmitted from a positioning server; and
determining a positioning integrity calculation result based on the positioning integrity assistance information.

In some embodiments, before obtaining the positioning integrity assistance information transmitted from the positioning server, the method further includes: transmitting a first request message to the positioning server, where the first request message includes indication information for requesting the positioning integrity assistance information.

In some embodiments, a content indicated by the indication information includes at least one of the following:

a request to obtain positioning integrity assistance information associated with transmission timing error;

a request to obtain positioning integrity assistance information associated with positioning reference signal (PRS) beam direction error;

a request to obtain positioning integrity assistance information associated with PRS beam angle association information error;

a request to obtain positioning integrity assistance information associated with time synchronization information error between a reference transmission and reception point (TRP) and neighboring TRPs;

a request to obtain positioning integrity assistance information associated with TRP position association information error;

a request to obtain positioning integrity assistance information associated with address resolution protocol (ARP) position association information error;

a request to obtain positioning integrity assistance information associated with line of sight (LOS) indication information error;

a request to obtain positioning integrity assistance information associated with non-line of sight (NLOS) indication information error;

a request to obtain positioning integrity assistance information associated with expected arrival angle error;

a request to obtain positioning integrity assistance information associated with expected departure angle error;

a request to obtain correlation time of any two pieces of positioning integrity assistance information being independent to each other; or,

a request to obtain an integrity risk (IR) value.

In some embodiments, obtaining the positioning integrity assistance information transmitted from the positioning server includes:

receiving a specific long-term evolution (LTE) positioning protocol (LPP) message transmitted from the positioning server, where the specific LPP message includes the positioning integrity assistance information; or,

receiving a positioning broadcast system message transmitted from the positioning server, where the positioning broadcast system message includes the positioning integrity assistance information.

In some embodiments, after determining the positioning integrity calculation result, the method further includes:

transmitting the positioning integrity calculation result to the positioning server,

where the positioning integrity calculation result includes at least one of the following:

a positioning integrity protection level;

an integrity risk (IR) value for calculating positioning integrity; or,

an indication identifier of whether a positioning result is reliable.

In some embodiments, the positioning integrity protection level includes a horizontal positioning integrity protection level and/or a vertical positioning integrity protection level.

In some embodiments, the IR value for calculating positioning integrity includes an IR value for calculating horizontal positioning integrity and/or an IR value for calculating vertical positioning integrity.

In some embodiments, the positioning integrity assistance information includes at least one of the following:

a transmission timing error do not use (DNU) identifier;

a transmission timing error mean value for calculating transmission timing error bound and a transmission timing error standard deviation for calculating transmission timing error bound;

a transmission timing error occurrence probability per unit of time for calculating transmission timing error residual risk and an expected failure duration for calculating transmission timing error residual risk;

a positioning reference signal (PRS) beam direction error DNU identifier;

a mean value for calculating PRS beam direction error bound and a standard deviation for calculating PRS beam direction error bound;

an error occurrence probability per unit of time for calculating PRS beam direction error residual risk and an expected failure duration for calculating PRS beam direction error residual risk;

a PRS beam angle association information error DNU identifier;

a mean value for calculating PRS beam angle association information error bound and a standard deviation for calculating PRS beam angle association information error bound;

an error occurrence probability per unit of time for calculating PRS beam angle association information error residual risk and an expected failure duration for calculating PRS beam angle association information error residual risk;

a time synchronization information error DNU identifier between a reference transmission and reception point (TRP) and neighboring TRPs;

a mean value for calculating time synchronization information error bound between a reference TRP and neighboring TRPs and a standard deviation for calculating time synchronization information error bound between the reference TRP and neighboring TRPs;

an error occurrence probability per unit of time for calculating residual risk of time synchronization information error between a reference TRP and neighboring TRPs and an expected failure duration for calculating residual risk of time synchronization information error between the reference TRP and neighboring TRPs;

a TRP position association information error DNU identifier;

a mean value for calculating TRP position association information error bound and a standard deviation for calculating TRP position association information error bound;

an error occurrence probability per unit of time for calculating TRP position association information error residual risk and an expected failure duration for calculating TRP position association information error residual risk;

an address resolution protocol (ARP) position association information error DNU identifier;

a mean value for calculating ARP position association information error bound and a standard deviation for calculating ARP position association information error bound;

an error occurrence probability per unit of time for calculating ARP position association information error residual risk and an expected failure duration for calculating ARP position association information error residual risk;

a line of sight (LOS) indication information error DNU identifier;

a mean value for calculating LOS indication information error bound and a standard deviation for calculating LOS indication information error bound;

an error occurrence probability per unit of time for calculating LOS indication information error residual risk and an expected failure duration for calculating LOS indication information error residual risk;

a non-line of sight (NLOS) indication information error DNU identifier;

a mean value for calculating NLOS indication information error bound and a standard deviation for calculating NLOS indication information error bound;

an error occurrence probability per unit of time for calculating NLOS indication information error residual risk and an expected failure duration for calculating NLOS indication information error residual risk;

an expected arrival angle error DNU identifier;

a mean value for calculating expected arrival angle error bound and a standard deviation for calculating expected arrival angle error bound;

an error occurrence probability per unit of time for calculating expected arrival angle error residual risk and an expected failure duration for calculating expected arrival angle error residual risk;

an expected departure angle error DNU identifier;

a mean value for calculating expected departure angle error bound and a standard deviation for calculating expected departure angle error bound;

an error occurrence probability per unit of time for calculating expected departure angle error residual risk and an expected failure duration for calculating expected departure angle error residual risk;

correlation time of any two pieces of positioning integrity assistance information being independent to each other;

a maximum value of integrity risk (IR) and a minimum value of IR; or,

an expected IR value for calculating positioning integrity calculation result.

An embodiment of the present application further provides a method for determining positioning integrity, performed by a positioning server, including: transmitting positioning integrity assistance information to a terminal, where the positioning integrity assistance information is used to determine a positioning integrity calculation result.

In some embodiments, before transmitting the positioning integrity assistance information to the terminal, the method further includes:
receiving a first request message transmitted from the terminal, where the first request message includes indication information for requesting the positioning integrity assistance information.

In some embodiments, before transmitting the positioning integrity assistance information to the terminal, the method further includes:
receiving a *NewRadioPositioningProtocolAnnex* (NRPPa) message transmitted from a base station, where the NRPPa message includes the positioning integrity assistance information.

In some embodiments, before receiving the NRPPa message transmitted from the base station, the method further includes:
transmitting a second request message to the base station, where the second request message includes indication information for requesting the positioning integrity assistance information.

In some embodiments, transmitting the positioning integrity assistance information to the terminal includes:

transmitting a specific long-term evolution (LTE) positioning protocol (LPP) message to the terminal, where the specific LPP message includes the positioning integrity assistance information; or,

transmitting a positioning broadcast system message to the terminal, where the positioning broadcast system message includes the positioning integrity assistance information.

In some embodiments, after transmitting the positioning integrity assistance information to the terminal, the method further includes:

receiving a positioning integrity calculation result transmitted from the terminal,

where the positioning integrity calculation result includes at least one of the following:

a positioning integrity protection level;

an integrity risk (IR) value for calculating positioning integrity; or,

an indication identifier of whether a positioning calculation is reliable.

An embodiment of the present application further provides a method for determining positioning integrity, performed by a base station, including: transmitting a *NewRadioPositioningProtocolAnnex* (NRPPa) message to a positioning server, where the NRPPa message includes positioning integrity assistance information, and the positioning integrity assistance information is used to determine a positioning integrity calculation result.

In some embodiments, before transmitting the NRPPa message to the positioning server, the method further includes: receiving a second request message transmitted from the positioning server, where the second request message includes indication information for requesting the positioning integrity assistance information.

An embodiment of the present application further provides a terminal, including a memory, a transceiver, and a processor, where the memory is used for storing a computer program, the transceiver is used for receiving and transmitting data under control of the processor, and the processor is used for reading the computer program in the memory and performing the following operations:

obtaining positioning integrity assistance information transmitted from a positioning server; and

determining a positioning integrity calculation result based on the positioning integrity assistance information.

In some embodiments, before obtaining the positioning integrity assistance information transmitted from the positioning server, the operations further include: transmitting a first request message to the positioning server, where the first request message includes indication information for requesting the positioning integrity assistance information.

In some embodiments, a content indicated by the indication information includes at least one of the following:

a request to obtain positioning integrity assistance information associated with transmission timing error;

a request to obtain positioning integrity assistance information associated with positioning reference signal (PRS) beam direction error;

a request to obtain positioning integrity assistance information associated with PRS beam angle association information error;

a request to obtain positioning integrity assistance information associated with time synchronization information error between a reference transmission and reception point (TRP) and neighboring TRPs;

a request to obtain positioning integrity assistance information associated with TRP position association information error;

a request to obtain positioning integrity assistance information associated with address resolution protocol (ARP) position association information error;

a request to obtain positioning integrity assistance information associated with line of sight (LOS) indication information error;

a request to obtain positioning integrity assistance information associated with non-line of sight (NLOS) indication information error;

a request to obtain positioning integrity assistance information associated with expected arrival angle error;

a request to obtain positioning integrity assistance information associated with expected departure angle error;

a request to obtain correlation time of any two pieces of positioning integrity assistance information being independent to each other; or,

a request to obtain an integrity risk (IR) value.

In some embodiments, obtaining the positioning integrity assistance information transmitted from the positioning server includes:

receiving a specific long-term evolution (LTE) positioning protocol (LPP) message transmitted from the positioning server, where the specific LPP message includes the positioning integrity assistance information; or,

receiving a positioning broadcast system message transmitted from the positioning server, where the positioning broadcast system message includes the positioning integrity assistance information.

In some embodiments, after determining the positioning integrity calculation result, the operations further include:

transmitting the positioning integrity calculation result to the positioning server,

where the positioning integrity calculation result includes at least one of the following:

a positioning integrity protection level;

an integrity risk (IR) value for calculating positioning integrity; or,

an indication identifier of whether a positioning result is reliable.

In some embodiments, the positioning integrity protection level includes a horizontal positioning integrity protection level and/or a vertical positioning integrity protection level.

In some embodiments, the IR value for calculating positioning integrity includes an IR value for calculating horizontal positioning integrity and/or an IR value for calculating vertical positioning integrity.

In some embodiments, the positioning integrity assistance information includes at least one of the following:

a transmission timing error do not use (DNU) identifier;

a transmission timing error mean value for calculating transmission timing error bound and a transmission timing error standard deviation for calculating transmission timing error bound;

a transmission timing error occurrence probability per unit of time for calculating transmission timing error residual risk and an expected failure duration for calculating transmission timing error residual risk;

a positioning reference signal (PRS) beam direction error DNU identifier;

a mean value for calculating PRS beam direction error bound and a standard deviation for calculating PRS beam direction error bound;

an error occurrence probability per unit of time for calculating PRS beam direction error residual risk and an expected failure duration for calculating PRS beam direction error residual risk;

a PRS beam angle association information error DNU identifier;

a mean value for calculating PRS beam angle association information error bound and a standard deviation for calculating PRS beam angle association information error bound;

an error occurrence probability per unit of time for calculating PRS beam angle association information error residual risk and an expected failure duration for calculating PRS beam angle association information error residual risk;

a time synchronization information error DNU identifier between a reference transmission and reception point (TRP) and neighboring TRPs;

a mean value for calculating time synchronization information error bound between a reference TRP and neighboring TRPs and a standard deviation for calculating time synchronization information error bound between the reference TRP and neighboring TRPs;

an error occurrence probability per unit of time for calculating residual risk of time synchronization information error between a reference TRP and neighboring TRPs and an expected failure duration for calculating residual risk of time synchronization information error between the reference TRP and neighboring TRPs;

a TRP position association information error DNU identifier;

a mean value for calculating TRP position association information error bound and a standard deviation for calculating TRP position association information error bound;

an error occurrence probability per unit of time for calculating TRP position association information error residual risk and an expected failure duration for calculating TRP position association information error residual risk;

an address resolution protocol (ARP) position association information error DNU identifier;

a mean value for calculating ARP position association information error bound and a standard deviation for calculating ARP position association information error bound;

an error occurrence probability per unit of time for calculating ARP position association information error residual risk and an expected failure duration for calculating ARP position association information error residual risk;

a line of sight (LOS) indication information error DNU identifier;

a mean value for calculating LOS indication information error bound and a standard deviation for calculating LOS indication information error bound;

an error occurrence probability per unit of time for calculating LOS indication information error residual risk and an expected failure duration for calculating LOS indication information error residual risk;

a non-line of sight (NLOS) indication information error DNU identifier;

a mean value for calculating NLOS indication information error bound and a standard deviation for calculating NLOS indication information error bound;

an error occurrence probability per unit of time for calculating NLOS indication information error residual risk and an expected failure duration for calculating NLOS indication information error residual risk;

an expected arrival angle error DNU identifier;

a mean value for calculating expected arrival angle error bound and a standard deviation for calculating expected arrival angle error bound;

an error occurrence probability per unit of time for calculating expected arrival angle error residual risk and an expected failure duration for calculating expected arrival angle error residual risk;

an expected departure angle error DNU identifier;

a mean value for calculating expected departure angle error bound and a standard deviation for calculating expected departure angle error bound;

an error occurrence probability per unit of time for calculating expected departure angle error residual risk and an expected failure duration for calculating expected departure angle error residual risk;

correlation time of any two pieces of positioning integrity assistance information being independent to each other;

a maximum value of integrity risk (IR) and a minimum value of IR; or,

an expected IR value for calculating positioning integrity calculation result.

An embodiment of the present application further provides a positioning server, including a memory, a transceiver, and a processor,

where the memory is used for storing a computer program, the transceiver is used for receiving and transmitting data under control of the processor, and the processor is used for reading the computer program in the memory and performing the following operations:

transmitting positioning integrity assistance information to a terminal, where the positioning integrity assistance information is used to determine a positioning integrity calculation result.

In some embodiments, before transmitting the positioning integrity assistance information to the terminal, the operations further include:
receiving a first request message transmitted from the terminal, where the first request message includes indication information for requesting the positioning integrity assistance information.
In some embodiments, before transmitting the positioning integrity assistance information to the terminal, the operations further include:
receiving a *NewRadioPositioningProtocolAnnex* (NRPPa) message transmitted from a base station, where the NRPPa message includes the positioning integrity assistance information.
In some embodiments, before receiving the NRPPa message transmitted from the base station, the operations further include:
transmitting a second request message to the base station, where the second request message includes indication information for requesting the positioning integrity assistance information.
In some embodiments, transmitting the positioning integrity assistance information to the terminal includes:

transmitting a specific long-term evolution (LTE) positioning protocol (LPP) message to the terminal, where the specific LPP message includes the positioning integrity assistance information; or,

transmitting a positioning broadcast system message to the terminal, where the positioning broadcast system message includes the positioning integrity assistance information.

In some embodiments, after transmitting the positioning integrity assistance information to the terminal, the operations further include:

receiving a positioning integrity calculation result transmitted from the terminal,

where the positioning integrity calculation result includes at least one of the following:

a positioning integrity protection level;

an integrity risk (IR) value for calculating positioning integrity; or,

an indication identifier of whether a positioning calculation is reliable.

An embodiment of the present application further provides a base station, including a memory, a transceiver, and a processor,
where the memory is used for storing a computer program, the transceiver is used for receiving and transmitting data under control of the processor, and the processor is used for reading the computer program in the memory and performing the following operations:
transmitting a *NewRadioPositioningProtocolAnnex* (NRPPa) message to a positioning server, where the NRPPa message includes positioning integrity assistance information, and the positioning integrity assistance information is used to determine a positioning integrity calculation result.

In some embodiments, before transmitting the NRPPa message to the positioning server, the operations further include:
receiving a second request message transmitted from the positioning server, where the second request message includes indication information for requesting the positioning integrity assistance information.

An embodiment of the present application further provides an apparatus for determining positioning integrity, including:

an obtaining unit, used for obtaining positioning integrity assistance information transmitted from a positioning server; and

a determining unit, used for determining a positioning integrity calculation result based on the positioning integrity assistance information.

In some embodiments, the apparatus further includes:
a first transmitting unit, used for transmitting a first request message to the positioning server, where the first request message includes indication information for requesting the positioning integrity assistance information.

In some embodiments, a content indicated by the indication information includes at least one of the following:

a request to obtain positioning integrity assistance information associated with transmission timing error;

a request to obtain positioning integrity assistance information associated with positioning reference signal (PRS) beam direction error;

a request to obtain positioning integrity assistance information associated with PRS beam angle association information error;

a request to obtain positioning integrity assistance information associated with time synchronization information error between a reference transmission and reception point (TRP) and neighboring TRPs;

a request to obtain positioning integrity assistance information associated with TRP position association information error;

a request to obtain positioning integrity assistance information associated with address resolution protocol (ARP) position association information error;

a request to obtain positioning integrity assistance information associated with line of sight (LOS) indication information error;

a request to obtain positioning integrity assistance information associated with non-line of sight (NLOS) indication information error;

a request to obtain positioning integrity assistance information associated with expected arrival angle error;

a request to obtain positioning integrity assistance information associated with expected departure angle error;

a request to obtain correlation time of any two pieces of positioning integrity assistance information being independent to each other; or,

a request to obtain an integrity risk (IR) value.

In some embodiments, the obtaining unit is further used for:

receiving a specific long-term evolution (LTE) positioning protocol (LPP) message transmitted from the positioning server, where the specific LPP message includes the positioning integrity assistance information; or,

receiving a positioning broadcast system message transmitted from the positioning server, where the positioning broadcast system message includes the positioning integrity assistance information.

In some embodiments, the apparatus further includes:

a transmitting unit, used for transmitting the positioning integrity calculation result to the positioning server,

where the positioning integrity calculation result includes at least one of the following:

a positioning integrity protection level;

an integrity risk (IR) value for calculating positioning integrity; or,

an indication identifier of whether a positioning result is reliable.

In some embodiments, the positioning integrity protection level includes a horizontal positioning integrity protection level and/or a vertical positioning integrity protection level.

In some embodiments, the IR value for calculating positioning integrity includes an IR value for calculating horizontal positioning integrity and/or an IR value for calculating vertical positioning integrity.

In some embodiments, the positioning integrity assistance information includes at least one of the following:

a transmission timing error do not use (DNU) identifier;

a transmission timing error mean value for calculating transmission timing error bound and a transmission timing error standard deviation for calculating transmission timing error bound;

a transmission timing error occurrence probability per unit of time for calculating transmission timing error residual risk and an expected failure duration for calculating transmission timing error residual risk;

a positioning reference signal (PRS) beam direction error DNU identifier;

a mean value for calculating PRS beam direction error bound and a standard deviation for calculating PRS beam direction error bound;

an error occurrence probability per unit of time for calculating PRS beam direction error residual risk and an expected failure duration for calculating PRS beam direction error residual risk;

a PRS beam angle association information error DNU identifier;

a mean value for calculating PRS beam angle association information error bound and a standard deviation for calculating PRS beam angle association information error bound;

an error occurrence probability per unit of time for calculating PRS beam angle association information error residual risk and an expected failure duration for calculating PRS beam angle association information error residual risk;

a time synchronization information error DNU identifier between a reference transmission and reception point (TRP) and neighboring TRPs;

a mean value for calculating time synchronization information error bound between a reference TRP and neighboring TRPs and a standard deviation for calculating time synchronization information error bound between the reference TRP and neighboring TRPs;

an error occurrence probability per unit of time for calculating residual risk of time synchronization information error between a reference TRP and neighboring TRPs and an expected failure duration for calculating residual risk of time synchronization information error between the reference TRP and neighboring TRPs;

a TRP position association information error DNU identifier;

a mean value for calculating TRP position association information error bound and a standard deviation for calculating TRP position association information error bound;

an error occurrence probability per unit of time for calculating TRP position association information error residual risk and an expected failure duration for calculating TRP position association information error residual risk;

an address resolution protocol (ARP) position association information error DNU identifier;

a mean value for calculating ARP position association information error bound and a standard deviation for calculating ARP position association information error bound;

an error occurrence probability per unit of time for calculating ARP position association information error residual risk and an expected failure duration for calculating ARP position association information error residual risk;

a line of sight (LOS) indication information error DNU identifier;

a mean value for calculating LOS indication information error bound and a standard deviation for calculating LOS indication information error bound;

an error occurrence probability per unit of time for calculating LOS indication information error residual risk and an expected failure duration for calculating LOS indication information error residual risk;

a non-line of sight (NLOS) indication information error DNU identifier;

a mean value for calculating NLOS indication information error bound and a standard deviation for calculating NLOS indication information error bound;

an error occurrence probability per unit of time for calculating NLOS indication information error residual risk and an expected failure duration for calculating NLOS indication information error residual risk;

an expected arrival angle error DNU identifier;

a mean value for calculating expected arrival angle error bound and a standard deviation for calculating expected arrival angle error bound;

an error occurrence probability per unit of time for calculating expected arrival angle error residual risk and an expected failure duration for calculating expected arrival angle error residual risk;

an expected departure angle error DNU identifier;

a mean value for calculating expected departure angle error bound and a standard deviation for calculating expected departure angle error bound;

an error occurrence probability per unit of time for calculating expected departure angle error residual risk and an expected failure duration for calculating expected departure angle error residual risk;

correlation time of any two pieces of positioning integrity assistance information being independent to each other;

a maximum value of integrity risk (IR) and a minimum value of IR; or,

an expected IR value for calculating positioning integrity calculation result.

An embodiment of the present application provides an apparatus for determining positioning integrity, including:
a first transmitting unit, used for transmitting positioning integrity assistance information to a terminal, where the positioning integrity assistance information is used to determine a positioning integrity calculation result.

In some embodiments, the apparatus further includes:
a first receiving unit, used for receiving a first request message transmitted from the terminal, where the first request message includes indication information for requesting the positioning integrity assistance information.

In some embodiments, the apparatus further includes:
a second receiving unit, used for receiving a NewRadioPositioningProtocolAnnex (NRPPa) message transmitted from a base station, where the NRPPa message includes the positioning integrity assistance information.

In some embodiments, the apparatus further includes:
a second transmitting unit, used for transmitting a second request message to the base station, where the second request message includes indication information for requesting the positioning integrity assistance information.

In some embodiments, the first transmitting unit is further used for:

transmitting a specific long-term evolution (LTE) positioning protocol (LPP) message to the terminal, where the specific LPP message includes the positioning integrity assistance information; or,

transmitting a positioning broadcast system message to the terminal, where the positioning broadcast system message includes the positioning integrity assistance information.

In some embodiments, the apparatus further includes:

a third receiving unit, used for receiving a positioning integrity calculation result transmitted from the terminal,

where the positioning integrity calculation result includes at least one of the following:

a positioning integrity protection level;

an integrity risk (IR) value for calculating positioning integrity; or,

an indication identifier of whether a positioning calculation is reliable.

An embodiment of the present application further provides an apparatus for determining positioning integrity, including:
a second transmitting unit, used for transmitting a NewRadioPositioningProtocolAnnex (NRPPa) message to a positioning server, where the NRPPa message includes positioning integrity assistance information, and the positioning integrity assistance information is used to determine a positioning integrity calculation result.

In some embodiments, the apparatus further includes:

a receiving unit, used for receiving a second request message transmitted from the positioning server, where the second request message includes indication information for requesting the positioning integrity assistance information.

An embodiment of the present application further provides a processor-readable storage medium storing a computer program, where the computer program causes a processor to perform the above method for determining positioning integrity performed by the terminal, the positioning server, or the base station.

An embodiment of the present application further provides a computer-readable storage medium storing a computer program, where the computer program causes a computer to perform the above method for determining positioning integrity performed by the terminal, the positioning server, or the base station.

An embodiment of the present application further provides a communication device-readable storage medium storing a computer program, where the computer program causes a communication device to perform the above method for determining positioning integrity performed by the terminal, the positioning server, or the base station.

An embodiment of the present application further provides a chip product-readable storage medium storing a computer program, where the computer program causes a chip product to perform the above method for determining positioning integrity performed by the terminal, the positioning server, or the base station.

In the methods and apparatuses for determining positioning integrity, and the storage medium provided by the embodiments of the present application, the terminal obtains the positioning integrity assistance information from the positioning server side, and obtains the positioning integrity calculation result through a calculation based on the corresponding positioning integrity assistance information and/or the integrity association parameters of the terminal itself, which improves the position accuracy and reliability of the terminal-based downlink cellular network related positioning method.

BRIEF DESCRIPTION OF THE DRAWINGS

In order to clearly illustrate the solutions in the embodiments of the present application, the drawings used in the description of the embodiments are briefly described below. The drawings in the following description are only some embodiments of the present application, and other drawings may be obtained according to these drawings without any creative efforts for those skilled in the art.

FIG. 1 is a first schematic flowchart of a method for determining positioning integrity according to an embodiment of the present application;

FIG. 2 is a second schematic flowchart of a method for determining positioning integrity according to an embodiment of the present application;

FIG. 3 is a third schematic flowchart of a method for determining positioning integrity according to an embodiment of the present application;

FIG. 4 is a schematic diagram showing an interaction between a positioning server and a base station according to an embodiment of the present application;

FIG. 5 is a first schematic diagram showing an interaction between a positioning server and a terminal according to an embodiment of the present application;

FIG. 6 is a second schematic diagram showing an interaction between a positioning server and a terminal according to an embodiment of the present application;

FIG. 7 is a third schematic diagram showing an interaction between a positioning server and a terminal according to an embodiment of the present application;

FIG. 8 is a schematic diagram showing an interaction between a terminal, a positioning server and a base station according to an embodiment of the present application;

FIG. 9 is a schematic structural diagram of a terminal according to an embodiment of the present application;

FIG. 10 is a schematic structural diagram of a positioning server according to an embodiment of the present application;

FIG. 11 is a schematic structural diagram of a base station according to an embodiment of the present application;

FIG. 12 is a first schematic structural diagram of an apparatus for determining positioning integrity according to an embodiment of the present application;

FIG. 13 is a second schematic structural diagram of an apparatus for determining positioning integrity according to an embodiment of the present application; and

FIG. 14 is a third schematic structural diagram of an apparatus for determining positioning integrity according to an embodiment of the present application.

DETAILED DESCRIPTION

In order to make the objectives, solutions and advantages of the embodiments of the present application clearer, the solutions in the embodiments of the present application are clearly and completely described below in conjunction with the drawings in the embodiments of the present application. The described embodiments are only some embodiments of the present application, but not all embodiments. Based on the embodiments of the present application, all other embodiments obtained by those of ordinary skill in the art without making creative efforts fall within the scope of protection of the present application.

In order to facilitate a clear description of the solutions in the embodiments of the present application, in each embodiment of the present application, if words such as "first" and "second" are used to distinguish the same or similar items with basically the same functions and effects, those skilled in the art may understand that the words such as "first" and "second" do not limit the number and execution order.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

Positioning integrity represents a level of trust in the accuracy of position-related calculations provided by a system and is a measurement for capability of providing timely and effective warning to user in case that the positioning system does not meet expected operating conditions. In current user equipment-based (UE-based) downlink cellular network related positioning methods, UE cannot obtain integrity assistance data that supports integrity function. As such, the reliability of the position calculation cannot be obtained, which may lead to unreliable positioning or even positioning failure.

Integrity is explained below.

An indicator representing that an error of position estimation is controlled within a certain range requirement is an integrity indicator requirement. Integrity indicator requirements include the following parameters.

1. Target integrity risk (TIR), which represents the possibility that a positioning error exceeds an alarm limit (AL) but the user does not receive a warning within a required time-to-alert (TTA).

2. AL, which represents an allowed maximum positioning error when a positioning system is used in an expected application. If the positioning error (PE) exceeds the AL range, it should be declared that the positioning system is unsuitable for the expected application, to prevent a loss of positioning integrity. The AL may include horizontal AL and vertical AL.

3. TTA, which represents allowed maximum elapsed time from when the PE exceeds the AL to when a functional entity that provides positioning integrity sends out a corresponding alarm.

4. Integrity availability, which represents a percentage of time that a protection level (PL) is lower than a required AL.

5. PL, which represents a statistical upper limit of PE, ensuring that the probability per unit of time that a duration in which a true error is greater than AL and PL is less than or equal to AL is longer than TTA is less than a required TIR.

In case that PL limits PE on the horizontal plane or vertical axis, it is called horizontal protection level (HPL) or vertical protection level (VPL) respectively.

The method for detecting positioning integrity provided by the embodiment of the present application is applied to the positioning integrity implementation method in UE-based downlink cellular network related positioning scenarios.

The calculation formula of positioning integrity is as follows.

PL, which represents a statistical upper limit of PE, ensuring that the probability per unit of time that a duration in which a true error is greater than AL and PL is less than or equal to AL is longer than TTA is less than a required TIR.

PL satisfies the inequality that Prob per unit of time [((PE > AL)&(PL <= AL)) for longer than TTA] < required TIR.

PL is used to indicate the availability of positioning in a system. For example, in case that PL is greater than AL, the positioning system is considered unavailable.

PL establishes a more stringent upper limit on PE by considering additional failure events with very low occurrences compared to standard cases.

The distribution of PE satisfies that P (error > bound | NOT DNU) <= residual risk + IRallocation, where error is a difference between a true value of a parameter and an estimated or provided value by the parameter in corresponding assistance data.

Do not use (DNU) represents a DNU flag corresponding to a specific error, and is used to indicate whether assistance data from a source of relevant error can be used in position integrity calculation. In case that DNU is set to No, it indicates that relevant assistance data can be used for positioning integrity calculation. Otherwise, it indicates that these assistance data cannot be used for integrity calculation.

Residual risk represents the probability of occurrence of a failure event defined per unit of time. Each residual risk is accompanied by an average duration, which represents an expected average duration of the corresponding failure event and is used to convert the probability of occurrence into the presence probability of the failure event at any given time.

P (occurrence of the failure event) = average duration * probability of occurrence of the failure event defined per unit of time.

IRallocation represents an integrity risk. The information of value of IRallocation is given in the protocol.

Bound: an integrity bound provides a statistical distribution of the residuals associated with positioning correction. The integrity bound is used to statistically limit the residuals after applying positioning correction. The bound formula describes a bound model, including mean value and standard deviation.

The formula for calculating a bound of a specific error is Bound = mean + K * stdDev,

where stdDev represents the standard deviation,

$$K = \mathrm{normInv}(\mathrm{IRallocation} / 2),$$

K = normInv(IRallocation / 2),

where normInv represents an inverse cumulative distribution function of a normal distribution, IRminimum <= IRallocation <= IRmaximum,

where a client may select the IRminimum and the IRmaximum of IRallocation according to its own requirements.

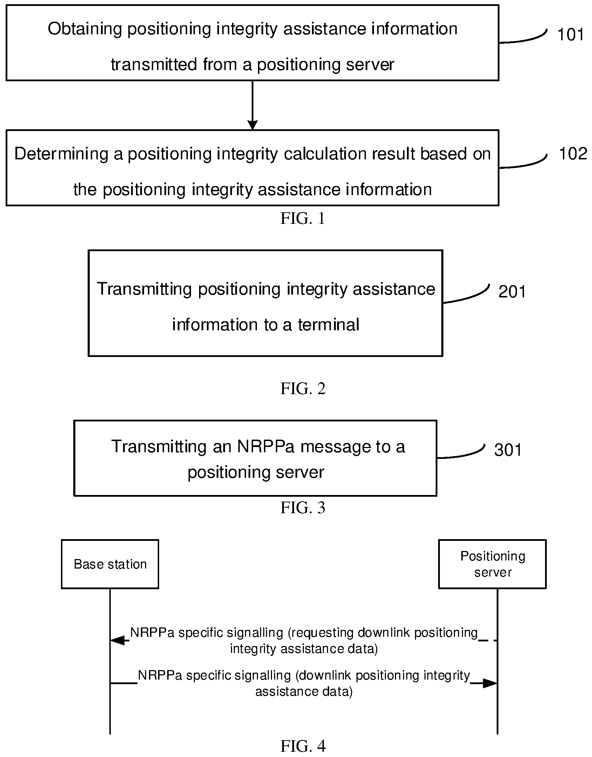

FIG. 1 is a first schematic flowchart of a method for determining positioning integrity according to an embodiment of the present application. As shown in FIG. 1, an embodiment of the present application provides a method for determining positioning integrity, where the method may be performed by a terminal (user equipment (UE)), such as a mobile phone, etc. The method includes the following steps.

Step 101: obtaining positioning integrity assistance information transmitted from a positioning server.

The positioning server is a location management function (LMF) network element that provides location management function. The positioning server transmits the positioning integrity assistance information to the terminal after the positioning server determines the positioning integrity assistance information. The positioning integrity assistance information is used to determine a positioning integrity calculation result.

The terminal obtains the positioning integrity assistance information from the positioning server side. The positioning integrity assistance information may be one or more of the following: a transmission timing error do not use (DNU) identifier; a transmission timing error mean value for calculating transmission timing error bound and a transmission timing error standard deviation for calculating transmission timing error bound; a transmission timing error occurrence probability per unit of time for calculating transmission timing error residual risk and an expected failure duration for calculating transmission timing error residual risk; a positioning reference signal (PRS) beam direction error DNU identifier; a mean value for calculating PRS beam direction error bound and a standard deviation for calculating PRS beam direction error bound; an error occurrence probability per unit of time for calculating PRS beam direction error residual risk and an expected failure duration for calculating PRS beam direction error residual risk; a PRS beam angle association information error DNU identifier; a mean value for calculating PRS beam angle association information error bound and a standard deviation for calculating PRS beam angle association information error bound; an error occurrence probability per unit of time for calculating PRS beam angle association information error residual risk and an expected failure duration for calculating PRS beam angle association information error residual risk; a time synchronization information error DNU identifier between a reference transmission and reception point (TRP) and neighboring TRP; a mean value for calculating time synchronization information error bound between a reference TRP and neighboring TRPs and a standard deviation for calculating time synchronization information error bound between the reference TRP and neighboring TRPs; an error occurrence probability per unit of time for calculating residual risk of time synchronization information error between a reference TRP and neighboring TRPs and an expected failure duration for calculating residual risk of time synchronization information error between the reference TRP and neighboring TRPs; a TRP position association information error DNU identifier; a mean value for calculating TRP position association information error bound and a standard deviation for calculating TRP position association information error bound; an error occurrence probability per unit of time for calculating TRP position association information error residual risk and an expected failure duration for calculating TRP position association information error residual risk; an address resolution protocol (ARP) position association information error DNU identifier; a mean value for calculating ARP position association information error bound and a standard deviation for calculating ARP position association information error bound; an error occurrence probability per unit of time for calculating ARP position association information error residual risk and an expected failure duration for calculating ARP position association information error residual risk; a line of sight (LOS) indication information error DNU identifier; a mean value for calculating LOS indication information error bound and a standard deviation for calculating LOS indication information error bound; an error occurrence probability per unit of time for calculating LOS indication information error residual risk and an expected failure duration for calculating LOS indication information error residual risk; a non-line of sight (NLOS) indication information error DNU identifier; a mean value for calculating NLOS indication information error bound and a standard deviation for calculating NLOS indication information error bound; an error occurrence probability per unit of time for calculating NLOS indication information error residual risk and an expected failure duration for calculating NLOS indication information error residual risk; an expected arrival angle error DNU identifier; a mean value for calculating expected arrival angle error bound and a standard deviation for calculating expected arrival angle error bound; an error occurrence probability per unit of time for calculating expected arrival angle error residual risk and an expected failure duration for calculating expected arrival angle error residual risk; an expected departure angle error DNU identifier; a mean value for calculating expected departure angle error bound and a standard deviation for calculating expected departure angle error bound; an error occurrence probability per unit of time for calculating expected departure angle error residual risk and an expected failure duration for calculating expected departure angle error residual risk; correlation time of any two pieces of positioning integrity assistance information being independent to each other; a maximum value of integrity risk (IR) and a minimum value of IR; or, an expected IR value for calculating positioning integrity calculation result.

The terminal may receive the positioning integrity assistance information transmitted periodically from the positioning server, or may receive the positioning integrity assistance information transmitted from the positioning server after each update of the positioning integrity assistance information.

In an embodiment, the terminal may transmit a request message to the positioning server, and the positioning server transmits the positioning integrity assistance information to the terminal after the positioning server receives the request message transmitted from the terminal.

In an embodiment, the positioning integrity assistance information may be obtained by the positioning server from base station side. A base station may transmit an *NewRadioPositioningProtocolAnnex* (NRPPa) message to the positioning server, and the NRPPa message includes the positioning integrity assistance information.

The positioning server receives the NRPPa message transmitted from the base station, where the NRPPa message includes the positioning integrity assistance information.

The positioning integrity assistance information may be one or more of the following: a transmission timing error DNU identifier; a transmission timing error mean value for calculating transmission timing error bound and a transmission timing error standard deviation for calculating transmission timing error bound; a transmission timing error occurrence probability per unit of time for calculating transmission timing error residual risk and an expected failure duration for calculating transmission timing error residual risk; a PRS beam direction error DNU identifier; a mean value for calculating PRS beam direction error bound and a standard deviation for calculating PRS beam direction error bound; an error occurrence probability per unit of time for calculating PRS beam direction error residual risk and an expected failure duration for calculating PRS beam direction error residual risk; a PRS beam angle association information error DNU identifier; a mean value for calculating PRS beam angle association information error bound and a standard deviation for calculating PRS beam angle association information error bound; an error occurrence probability per unit of time for calculating PRS beam angle association information error residual risk and an expected failure duration for calculating PRS beam angle association information error residual risk; a time synchronization information error DNU identifier between a reference TRP and neighboring TRPs; a mean value for calculating time synchronization information error bound between a reference TRP and neighboring TRPs and a standard deviation for calculating time synchronization information error bound between the reference TRP and neighboring TRPs; an error occurrence probability per unit of time for calculating residual risk of time synchronization information error between a reference TRP and neighboring TRPs and an expected failure duration for calculating residual risk of time synchronization information error between the reference TRP and neighboring TRPs; a TRP position association information error DNU identifier; a mean value for calculating TRP position association information error bound and a standard deviation for calculating TRP position association information error bound; an error occurrence probability per unit of time for calculating TRP position association information error residual risk and an expected failure duration for calculating TRP position association information error residual risk; an ARP position association information error DNU identifier; a mean value for calculating ARP position association information error bound and a standard deviation for calculating ARP position association information error bound; an error occurrence probability per unit of time for calculating ARP position association information error residual risk and an expected failure duration for calculating ARP position association information error residual risk; an LOS indication information error DNU identifier; a mean value for calculating LOS indication information error bound and a standard deviation for calculating LOS indication information error bound; an error occurrence probability per unit of time for calculating LOS indication information error residual risk and an expected failure duration for calculating LOS indication information error residual risk; a NLOS indication information error DNU identifier; a mean value for calculating NLOS indication information error bound and a standard deviation for calculating NLOS indication information error bound; an error occurrence probability per unit of time for calculating NLOS indication information error residual risk and an expected failure duration for calculating NLOS indication information error residual risk; an expected arrival angle error DNU identifier; a mean value for calculating expected arrival angle error bound and a standard deviation for calculating expected arrival angle error bound; an error occurrence probability per unit of time for calculating expected arrival angle error residual risk and an expected failure duration for calculating expected arrival angle error residual risk; an expected departure angle error DNU identifier; a mean value for calculating expected departure angle error bound and a standard deviation for calculating expected departure angle error bound; an error occurrence probability per unit of time for calculating expected departure angle error residual risk and an expected failure duration for calculating expected departure angle error residual risk; correlation time of any two pieces of positioning integrity assistance information being independent to each other; a maximum value of IR and a minimum value of IR; or, an expected IR value for calculating positioning integrity calculation result.

In an embodiment, the positioning server may receive the positioning integrity assistance information transmitted periodically from the base station, or may receive the positioning integrity assistance information transmitted from the base station after each update of the positioning integrity assistance information.

In addition, the positioning server may transmit a second request message to the base station. The second request message may be an NRPPa message, and the second request message carries indication information for requesting positioning integrity assistance information.

The content indicated by the indication information may be one or more of the following: a request to obtain positioning integrity assistance information associated with transmission timing error; a request to obtain positioning integrity assistance information associated with PRS beam direction error; a request to obtain positioning integrity assistance information associated with PRS beam angle association information error; a request to obtain positioning integrity assistance information associated with time synchronization information error between the reference TRP and neighboring TRPs; a request to obtain positioning integrity assistance information associated with TRP position association information error; a request to obtain positioning integrity assistance information associated with ARP position association information error; a request to obtain positioning integrity assistance information associated with LOS indication information error; a request to obtain positioning integrity assistance information associated with NLOS indication information error; a request to obtain positioning integrity assistance information associated with expected arrival angle error; a request to obtain positioning integrity assistance information associated with expected departure angle error; a request to obtain correlation time of any two pieces of positioning integrity assistance information being independent to each other; or, a request to obtain an IR value, etc.

In an embodiment, after receiving the NRPPa request message transmitted from the positioning server, the base station transmits an NRPPa message to the positioning server based on the content indicated by the indication information, where the NRPPa message transmitted from the base station includes the corresponding positioning integrity assistance information.

Step 102: determining a positioning integrity calculation result based on the positioning integrity assistance information.

The terminal may perform positioning integrity calculation based on the obtained positioning integrity assistance information and integrity-related parameters of the terminal itself, and then obtain the positioning integrity calculation result.

For example, the terminal may calculate and obtain the positioning integrity protection level (PL) through the positioning integrity formula based on the received positioning integrity assistance information, and then obtain whether the positioning result is reliable through a comparison based on an alarm limit (AL) obtained from the positioning server side in advance or an AL stored at the terminal side, to determine whether the positioning result is credible.

In the method for determining positioning integrity provided by the embodiments of the present application, the terminal obtains the positioning integrity assistance information from the positioning server side, and then the terminal obtains the positioning integrity calculation result through calculation based on the corresponding positioning integrity assistance information, which improves position accuracy and reliability of the terminal-based downlink cellular network related positioning methods.

In some embodiments, before obtaining the positioning integrity assistance information transmitted from the positioning server, the method further includes: transmitting a first request message to the positioning server, where the first request message includes indication information for requesting the positioning integrity assistance information.

The terminal may transmit the first request message to the positioning server. The first request message may be a long-term evolution (LTE) system positioning protocol (LTE positioning protocol, LPP) message. The first request message includes the indication information for requesting positioning integrity assistance information.

The content indicated by the indication information may be one or more of the following: a request to obtain positioning integrity assistance information associated with transmission timing error; a request to obtain positioning integrity assistance information associated with PRS beam direction error; a request to obtain positioning integrity assistance information associated with PRS beam angle association information error; a request to obtain positioning integrity assistance information associated with time synchronization information error between the reference TRP and neighboring TRPs; a request to obtain positioning integrity assistance information associated with TRP position association information error; a request to obtain positioning integrity assistance information associated with ARP position association information error; a request to obtain positioning integrity assistance information associated with LOS indication information error; a request to obtain positioning integrity assistance information associated with NLOS indication information error; a request to obtain positioning integrity assistance information associated with expected arrival angle error; a request to obtain positioning integrity assistance information associated with expected departure angle error; a request to obtain correlation time of any two pieces of positioning integrity assistance information being independent to each other; or, a request to obtain an IR value, etc.

The positioning server receives the first request message transmitted from the terminal, and transmits the corresponding positioning integrity assistance information to the terminal based on the content indicated by the indication information carried in the first request message.

In the method for determining positioning integrity provided by the embodiments of the present application, the terminal transmits the first request message to the positioning server, and after receiving the first request message, the positioning server transmits the corresponding positioning integrity assistance information to the terminal, which may prevent the positioning server from continuing to transmit the positioning integrity assistance information to the terminal, save resources, and achieve the purpose of saving network overhead.

In some embodiments, the content indicated by the indication information includes at least one of the following:

a request to obtain positioning integrity assistance information associated with transmission timing error;

a request to obtain positioning integrity assistance information associated with PRS beam direction error;

a request to obtain positioning integrity assistance information associated with PRS beam angle association information error;

a request to obtain positioning integrity assistance information associated with time synchronization information error between the reference TRP and neighboring TRPs;

a request to obtain positioning integrity assistance information associated with TRP position association information error;

a request to obtain positioning integrity assistance information associated with ARP position association information error;

a request to obtain positioning integrity assistance information associated with LOS indication information error;

a request to obtain positioning integrity assistance information associated with NLOS indication information error;

a request to obtain positioning integrity assistance information associated with expected arrival angle error;

a request to obtain positioning integrity assistance information associated with expected departure angle error;

a request to obtain correlation time of any two pieces of positioning integrity assistance information being independent to each other; or,

a request to obtain an IR value.

For the transmission timing error (Tx timing error), from a perspective of signal transmission, there is a timing difference between the time when the digital signal is generated at baseband and the time when the radio frequency signal is transmitted from Tx antenna. In order to support positioning, the terminal may perform internal calibration/compensation for the transmission delay before reporting the measurement value obtained from the downlink positioning reference signal/uplink positioning reference signal. However, the calibration cannot completely cancel the error. The remaining transmission timing delay after calibration or uncalibrated transmission timing delay is defined as the transmission timing error.

The NR Rel-16 downlink PRS resource set is defined as a set of a group of downlink PRS resources of the same TRP, where each downlink PRS resource has a downlink PRS resource identifier (ID). Each downlink PRS resource in the downlink PRS resource set is associated to a single spatial transmission filter (i.e. transmission beam) transmitted from a single TRP. The PRS beam direction refers to the pitch angle and horizontal angle information of the corresponding beam for transmitting the PRS.

The PRS beam angle association information refers to the PRS resource falling at each spatial angle and the relative power of the corresponding PRS resource.

The time synchronization information between the reference TRP and neighboring TRP refers to time synchronization information between the reference TRP and a series of neighboring TRPs and their uncertainty. The RTD information refers to the time synchronization information between the reference TRP and the series of neighboring TRPs and their uncertainty.

TRP position association information refers to a position of a certain TRP of a base station relative to a reference point and its uncertainty.

ARP position association information refers to a position of a certain PRS resource transmission and reception point of a certain TRP and its uncertainty.

LOS indication information refers to the possibility of an LOS propagation path between a certain TRP or a certain PRS of a TRP to the UE.

NLOS indication information refers to the possibility of an NLOS propagation path between a certain TRP or a certain PRS of a TRP to the UE.

The expected arrival angle refers to an expected angle of arrival of the positioning reference signal to the positioned UE.

The expected departure angle refers to an expected angle of departure of the positioning reference signal to the positioned UE.

In the method for determining positioning integrity provided by the embodiments of the present application, the terminal transmits the first request message to the positioning server, where the first request message includes indication information, and the positioning server may transmit the corresponding positioning assistance information to the terminal based on the content indicated by the indication information, which may avoid the waste of resources caused by transmitting redundant information and achieve the purpose of saving network overhead.

In some embodiments, obtaining the positioning integrity assistance information transmitted from the positioning server includes:

receiving a specific LPP message transmitted from the positioning server, where the specific LPP message includes the positioning integrity assistance information; or,

receiving a positioning broadcast system message transmitted from the positioning server, where the positioning broadcast system message includes the positioning integrity assistance information.

For the terminal-based downlink cellular network related positioning methods, the positioning server may transmit the specific LPP message to the terminal, and the specific LPP message includes the positioning integrity assistance information; or, the positioning server may transmit the positioning broadcast system message to the terminal, where the positioning broadcast system message includes the positioning integrity assistance information.

That is, the terminal may receive the specific LPP message transmitted from the positioning server, where the specific LPP message includes the positioning integrity assistance information.

Or, the terminal may receive the positioning broadcast system message transmitted from the positioning server, where the positioning broadcast system message includes the positioning integrity assistance information.

The specific LPP message may be an LPP providing positioning assistance data message, an LPP position request message, or other newly defined LPP messages. The positioning broadcast system message may be currently existing positioning broadcast system information, or a newly defined positioning broadcast system message.

In the method for determining positioning integrity provided by the embodiments of the present application, the terminal receives the specific LPP message or the positioning broadcast system message transmitted from the positioning server, and then the terminal may obtain the positioning integrity assistance information and obtain the positioning integrity calculation result through calculation, which further improves position accuracy and credibility of the terminal-based downlink cellular network related positioning methods.

In some embodiments, after determining the positioning integrity calculation result, the method further includes:

transmitting the positioning integrity calculation result to the positioning server,

where the positioning integrity calculation result includes at least one of the following:

a positioning integrity protection level;

an IR value for calculating positioning integrity; or,

an indication identifier of whether a positioning result is reliable.

The terminal may calculate and obtain the positioning integrity protection level (PL) through the positioning integrity formula based on the received positioning integrity assistance information, and transmit the positioning integrity PL to the positioning server.

The positioning server receives the positioning integrity calculation result transmitted from the terminal, that is, the positioning integrity PL, and may compare the positioning integrity PL with an alarm limit (AL) set in advance to determine whether the positioning result is reliable.

The terminal may also transmit the integrity risk (IRallocation (IR)) value used for calculating positioning integrity to the positioning server.

The positioning server receives the IR value for calculating positioning integrity transmitted from the terminal, and may determine the IR value used by the terminal to calculate positioning integrity, achieving better location management.

The terminal may also obtain an indication of whether the positioning result is reliable based on the calculated positioning integrity PL, and the AL obtained in advance from the positioning server side or the AL stored at the terminal side through a comparison, and transmit the indication of whether the positioning result is reliable to the positioning server.

After the positioning server receives the indication of whether the positioning result is reliable transmitted from the terminal, the positioning server may directly determine whether the positioning result is reliable based on the indication.

In the method for determining positioning integrity in the embodiments of the present application, the terminal transmits the calculated positioning integrity calculation result to the positioning server, and then the positioning server may determine whether the positioning result is reliable, achieving better location management.

In some embodiments, the positioning integrity protection level includes a horizontal positioning integrity protection level and/or a vertical positioning integrity protection level.

The positioning integrity PL may include horizontal positioning integrity PL, vertical positioning integrity PL, or both the horizontal positioning integrity PL and vertical positioning integrity PL.

The positioning integrity PL may also include a comprehensive positioning integrity PL obtained by superposing the horizontal positioning integrity PL and vertical positioning integrity PL.

The terminal may calculate and obtain the horizontal positioning integrity PL based on the received positioning integrity assistance information, and transmit the horizontal positioning integrity PL to the positioning server. The positioning server may compare the horizontal positioning integrity PL with the horizontal AL set in advance to determine whether the horizontal positioning result is reliable.

The terminal may also calculate and obtain the vertical positioning integrity PL based on the received positioning integrity assistance information, and transmit the vertical positioning integrity PL to the positioning server. The positioning server may compare the vertical positioning integrity PL with the vertical AL set in advance to determine whether the vertical positioning result is reliable.

In the method for determining positioning integrity in the embodiments of the present application, the terminal transmits the calculated horizontal positioning integrity PL and/or vertical positioning integrity PL to the positioning server, and then the positioning server may determine whether the horizontal positioning result and/or vertical positioning result is reliable, which improves the position accuracy and credibility of terminal-based downlink cellular network related positioning methods.

In some embodiments, the IR value for calculating positioning integrity includes: an IR value for calculating horizontal positioning integrity and/or an IR value for calculating vertical positioning integrity.

The IR values for calculating positioning integrity include: the IR value for calculating horizontal positioning integrity, the IR value for calculating vertical positioning integrity, or the IR values for calculating horizontal positioning integrity and vertical positioning integrity.

In the method for determining positioning integrity in the embodiments of the present application, the terminal transmits the IR value for calculating horizontal positioning integrity and/or the IR value for calculating vertical positioning integrity to the positioning server, and then the positioning server may perform better location management.

In some embodiments, the positioning integrity assistance information includes at least one of the following:

a transmission timing error DNU identifier;

a transmission timing error mean value for calculating transmission timing error bound and a transmission timing error standard deviation for calculating transmission timing error bound;

a transmission timing error occurrence probability per unit of time for calculating transmission timing error residual risk and an expected failure duration for calculating transmission timing error residual risk;

a PRS beam direction error DNU identifier;

a mean value for calculating PRS beam direction error bound and a standard deviation for calculating PRS beam direction error bound;

an error occurrence probability per unit of time for calculating PRS beam direction error residual risk and an expected failure duration for calculating PRS beam direction error residual risk;

a PRS beam angle association information error DNU identifier;

a mean value for calculating PRS beam angle association information error bound and a standard deviation for calculating PRS beam angle association information error bound;

an error occurrence probability per unit of time for calculating PRS beam angle association information error residual risk and an expected failure duration for calculating PRS beam angle association information error residual risk;

a time synchronization information error DNU identifier between a reference TRP and neighboring TRPs;

a mean value for calculating time synchronization information error bound between a reference TRP and neighboring TRPs and a standard deviation for calculating time synchronization information error bound between the reference TRP and neighboring TRPs;

an error occurrence probability per unit of time for calculating residual risk of time synchronization information error between a reference TRP and neighboring TRPs and an expected failure duration for calculating residual risk of time synchronization information error between the reference TRP and neighboring TRPs;

a TRP position association information error DNU identifier;

a mean value for calculating TRP position association information error bound and a standard deviation for calculating TRP position association information error bound;

an error occurrence probability per unit of time for calculating TRP position association information error residual risk and an expected failure duration for calculating TRP position association information error residual risk;

an ARP position association information error DNU identifier;

a mean value for calculating ARP position association information error bound and a standard deviation for calculating ARP position association information error bound;

an error occurrence probability per unit of time for calculating ARP position association information error residual risk and an expected failure duration for calculating ARP position association information error residual risk;

an LOS indication information error DNU identifier;

a mean value for calculating LOS indication information error bound and a standard deviation for calculating LOS indication information error bound;

an error occurrence probability per unit of time for calculating LOS indication information error residual risk and an expected failure duration for calculating LOS indication information error residual risk;

a NLOS indication information error DNU identifier;

a mean value for calculating NLOS indication information error bound and a standard deviation for calculating NLOS indication information error bound;

an error occurrence probability per unit of time for calculating NLOS indication information error residual risk and an expected failure duration for calculating NLOS indication information error residual risk;

an expected arrival angle error DNU identifier;

a mean value for calculating expected arrival angle error bound and a standard deviation for calculating expected arrival angle error bound;

an error occurrence probability per unit of time for calculating expected arrival angle error residual risk and an expected failure duration for calculating expected arrival angle error residual risk;

an expected departure angle error DNU identifier;

a mean value for calculating expected departure angle error bound and a standard deviation for calculating expected departure angle error bound;

an error occurrence probability per unit of time for calculating expected departure angle error residual risk and an expected failure duration for calculating expected departure angle error residual risk;

correlation time of any two pieces of positioning integrity assistance information being independent to each other;

a maximum value of IR and a minimum value of IR; or,

an expected IR value for calculating positioning integrity calculation result, where a range of the expected IR value for calculating positioning integrity calculation result is from a minimum value of IR to a maximum value of IR.

In the method for determining positioning integrity in the embodiments of the present application, the terminal obtains the positioning integrity calculation result through calculation based on the obtained positioning integrity assistance information, which further improves the position accuracy and credibility of the terminal-based downlink cellular network related positioning methods.

FIG. 2 is a second schematic flowchart of a method for determining positioning integrity according to an embodiment of the present application. As shown in FIG. 2, an embodiment of the present application provides a method for determining positioning integrity, where the method may be performed by a positioning server, such as a location management function (LMF) entity, etc. The method includes the following step.

Step 201: transmitting positioning integrity assistance information to a terminal, where the positioning integrity assistance information is used to determine a positioning integrity calculation result.

In some embodiments, before transmitting the positioning integrity assistance information to the terminal, the method further includes:

receiving a first request message transmitted from the terminal, where the first request message includes indication information for requesting the positioning integrity assistance information.

In some embodiments, before transmitting positioning integrity assistance information to the terminal, the method further includes:

receiving a *NewRadioPositioningProtocolAnnex* (NRPPa) message transmitted from a base station, where the NRPPa message includes the positioning integrity assistance information.

In some embodiments, before receiving the NRPPa message transmitted from the base station, the method further includes:

transmitting a second request message to the base station, where the second request message includes indication information for requesting the positioning integrity assistance information.

In some embodiments, transmitting positioning integrity assistance information to the terminal includes:

transmitting a specific long-term evolution (LTE) positioning protocol (LPP) message to the terminal, where the specific LPP message includes the positioning integrity assistance information; or,

transmitting a positioning broadcast system message to the terminal, where the positioning broadcast system message includes the positioning integrity assistance information.

In some embodiments, after transmitting the positioning integrity assistance information to the terminal, the method further includes:

receiving the positioning integrity calculation result transmitted from the terminal,

where the positioning integrity calculation result includes at least one of the following:

a positioning integrity protection level;

an IR value for calculating positioning integrity; or,

an indication identifier of whether a positioning calculation is reliable.

The method for determining positioning integrity provided by the embodiments of the present application may refer to the above-mentioned positioning method embodiments in which the execution subject is a terminal, and may achieve the same effects. The same parts and beneficial effects of the embodiments as the above-mentioned corresponding method embodiments are not repeated again.

FIG. 3 is a third schematic flowchart of a method for determining positioning integrity according to an embodiment of the present application. As shown in FIG. 3, an embodiment of the present application provides a method for determining positioning integrity, where the method is performed by a base station. The method includes the following step.

Step 301: transmitting a *NewRadioPositioningProtocolAnnex* (NRPPa) message to a positioning server, where the NRPPa message includes positioning integrity assistance information, and the positioning integrity assistance information is used to determine a positioning integrity calculation result.

The NRPPa message is transmitted to the positioning server, where the NRPPa message includes the positioning integrity assistance information, and the positioning integrity assistance information is used to determine the positioning integrity calculation result.

In some embodiments, before transmitting the NRPPa message to the positioning server, the method further includes:

receiving a second request message transmitted from the positioning server, where the second request message includes indication information for requesting the positioning integrity assistance information.

The method for determining positioning integrity provided by the embodiments of the present application may refer to the above-mentioned positioning method embodiments in which the execution subject is a terminal, and may achieve the same effects. The same parts and beneficial effects of the embodiments as the above-mentioned corresponding method embodiments are not repeated again.

The detailed procedure of the embodiments of the present application is described below through a schematic diagram of the interaction between the positioning server, the base station and the terminal.

Embodiment I

FIG. 4 is a schematic diagram showing an interaction between a positioning server and a base station according to an embodiment of the present application. As shown in FIG. 4, the interaction between the positioning server and the base station to obtain the positioning integrity assistance information may include the following steps.

Step 1: optionally, the positioning server transmits an NRPPa request message to the base station, where the NRPPa request message carries indication information for requesting downlink positioning integrity assistance information.

The content indicated by the indication information may be one or more of the following: a request to obtain positioning integrity assistance information associated with transmission timing error; a request to obtain positioning integrity assistance information associated with PRS beam direction error; a request to obtain positioning integrity assistance information associated with PRS beam angle association information error; a request to obtain positioning integrity assistance information associated with time synchronization information error between the reference TRP and neighboring TRPs; a request to obtain positioning integrity assistance information associated with TRP position association information error; a request to obtain positioning integrity assistance information associated with ARP position association information error; a request to obtain positioning integrity assistance information associated with LOS indication information error; a request to obtain positioning integrity assistance information associated with NLOS indication information error; a request to obtain positioning integrity assistance information associated with expected arrival angle error; a request to obtain positioning integrity assistance information associated with expected departure angle error; a request to obtain correlation time of any two pieces of positioning integrity assistance information being independent to each other; or, a request to obtain an IR value, etc.

Step 2: the base station transmits an NRPPa message to the positioning server, where the NRPPa message carries corresponding positioning integrity assistance information asociated with downlink positioning.

The positioning integrity assistance information may include one or more of the following:

a transmission timing error DNU identifier;

a transmission timing error mean value for calculating transmission timing error bound and a transmission timing error standard deviation for calculating transmission timing error bound;

a transmission timing error occurrence probability per unit of time for calculating transmission timing error residual risk and an expected failure duration for calculating transmission timing error residual risk;

a PRS beam direction error DNU identifier;

a mean value for calculating PRS beam direction error bound and a standard deviation for calculating PRS beam direction error bound;

an error occurrence probability per unit of time for calculating PRS beam direction error residual risk and an expected failure duration for calculating PRS beam direction error residual risk;

a PRS beam angle association information error DNU identifier;

a mean value for calculating PRS beam angle association information error bound and a standard deviation for calculating PRS beam angle association information error bound;

an error occurrence probability per unit of time for calculating PRS beam angle association information error residual risk and an expected failure duration for calculating PRS beam angle association information error residual risk;

a time synchronization information error DNU identifier between a reference TRP and neighboring TRPs;

a mean value for calculating time synchronization information error bound between a reference TRP and neighboring TRPs and a standard deviation for calculating time synchronization information error bound between the reference TRP and neighboring TRPs;

an error occurrence probability per unit of time for calculating residual risk of time synchronization information error between a reference TRP and neighboring TRPs and an expected failure duration for calculating residual risk of time synchronization information error between the reference TRP and neighboring TRPs;

a TRP position association information error DNU identifier;

a mean value for calculating TRP position association information error bound and a standard deviation for calculating TRP position association information error bound;

an error occurrence probability per unit of time for calculating TRP position association information error residual risk and an expected failure duration for calculating TRP position association information error residual risk;

an ARP position association information error DNU identifier;

a mean value for calculating ARP position association information error bound and a standard deviation for calculating ARP position association information error bound;

an error occurrence probability per unit of time for calculating ARP position association information error residual risk and an expected failure duration for calculating ARP position association information error residual risk;

an LOS indication information error DNU identifier;

a mean value for calculating LOS indication information error bound and a standard deviation for calculating LOS indication information error bound;

an error occurrence probability per unit of time for calculating LOS indication information error residual risk and an expected failure duration for calculating LOS indication information error residual risk;

a NLOS indication information error DNU identifier;

a mean value for calculating NLOS indication information error bound and a standard deviation for calculating NLOS indication information error bound;

an error occurrence probability per unit of time for calculating NLOS indication information error residual risk and an expected failure duration for calculating NLOS indication information error residual risk;

an expected arrival angle error DNU identifier;

a mean value for calculating expected arrival angle error bound and a standard deviation for calculating expected arrival angle error bound;

an error occurrence probability per unit of time for calculating expected arrival angle error residual risk and an expected failure duration for calculating expected arrival angle error residual risk;

an expected departure angle error DNU identifier;

a mean value for calculating expected departure angle error bound and a standard deviation for calculating expected departure angle error bound;

an error occurrence probability per unit of time for calculating expected departure angle error residual risk and an expected failure duration for calculating expected departure angle error residual risk;

correlation time of any two pieces of positioning integrity assistance information being independent to each other;

a maximum value of IR and a minimum value of IR; or,

an expected IR value for calculating positioning integrity calculation result.

Embodiment II

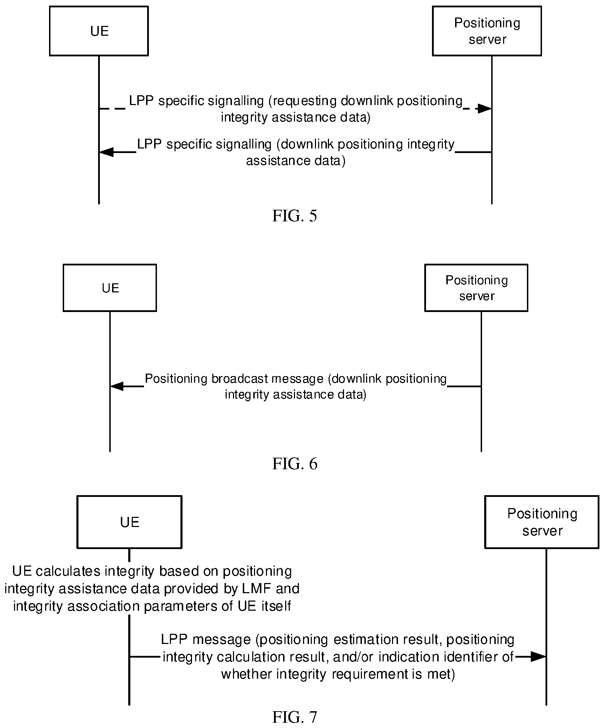

FIG. 5 is a first schematic diagram showing an interaction between a positioning server and a terminal according to an embodiment of the present application. As shown in FIG. 5, the procedure of the positioning server providing the positioning integrity assistance information to the terminal through a specific LPP message may include the following steps.

Step 1: optionally, the terminal transmits an LPP request message to the positioning server, where the LPP request message carries indication information for requesting downlink positioning integrity assistance information.

The content indicated by the indication information may be one or more of the following: a request to obtain positioning integrity assistance information associated with transmission timing error; a request to obtain positioning integrity assistance information associated with PRS beam direction error; a request to obtain positioning integrity assistance information associated with PRS beam angle association information error; a request to obtain positioning integrity assistance information associated with time synchronization information error between the reference TRP and neighboring TRPs; a request to obtain positioning integrity assistance information associated with TRP position association information error; a request to obtain positioning integrity assistance information associated with ARP position association information error; a request to obtain positioning integrity assistance information associated with LOS indication information error; a request to obtain positioning integrity assistance information associated with NLOS indication information error; a request to obtain positioning integrity assistance information associated with expected arrival angle error; a request to obtain positioning integrity assistance information associated with expected departure angle error; a request to obtain correlation time of any two pieces of positioning integrity assistance information being independent to each other; or, a request to obtain an IR value, etc.

Step 2: the positioning server transmits a downlink LPP message to the terminal, where the LPP message includes corresponding positioning integrity assistance information associated with downlink positioning.

The positioning integrity assistance information may include one or more of the following: a transmission timing error DNU identifier; a transmission timing error mean value for calculating transmission timing error bound and a transmission timing error standard deviation for calculating transmission timing error bound; a transmission timing error occurrence probability per unit of time for calculating transmission timing error residual risk and an expected failure duration for calculating transmission timing error residual risk; a PRS beam direction error DNU identifier; a mean value for calculating PRS beam direction error bound and a standard deviation for calculating PRS beam direction error bound; an error occurrence probability per unit of time for calculating PRS beam direction error residual risk and an expected failure duration for calculating PRS beam direction error residual risk; a PRS beam angle association information error DNU identifier; a mean value for calculating PRS beam angle association information error bound and a standard deviation for calculating PRS beam angle association information error bound; an error occurrence probability per unit of time for calculating PRS beam angle association information error residual risk and an expected failure duration for calculating PRS beam angle association information error residual risk; a time synchronization information error DNU identifier between a reference TRP and neighboring TRPs; a mean value for calculating time synchronization information error bound between a reference TRP and neighboring TRPs and a standard deviation for calculating time synchronization information error bound between the reference TRP and neighboring TRPs; an error occurrence probability per unit of time for calculating residual risk of time synchronization information error between a reference TRP and neighboring TRPs and an expected failure duration for calculating residual risk of time synchronization information error between the reference TRP and neighboring TRPs; a TRP position association information error DNU identifier; a mean value for calculating TRP position association information error bound and a standard deviation for calculating TRP position association information error bound; an error occurrence probability per unit of time for calculating TRP position association information error residual risk and an expected failure duration for calculating TRP position association information error residual risk; an ARP position association information error DNU identifier; a mean value for calculating ARP position association information error bound and a standard deviation for calculating ARP position association information error bound; an error occurrence probability per unit of time for calculating ARP position association information error residual risk and an expected failure duration for calculating ARP position association information error residual risk; an LOS indication information error DNU identifier; a mean value for calculating LOS indication information error bound and a standard deviation for calculating LOS indication information error bound; an error occurrence probability per unit of time for calculating LOS indication information error residual risk and an expected failure duration for calculating LOS indication information error residual risk; a NLOS indication information error DNU identifier; a mean value for calculating NLOS indication information error bound and a standard deviation for calculating NLOS indication information error bound; an error occurrence probability per unit of time for calculating NLOS indication information error residual risk and an expected failure duration for calculating NLOS indication information error residual risk; an expected arrival angle error DNU identifier; a mean value for calculating expected arrival angle error bound and a standard deviation for calculating expected arrival angle error bound; an error occurrence probability per unit of time for calculating expected arrival angle error residual risk and an expected failure duration for calculating expected arrival angle error residual risk; an expected departure angle error DNU identifier; a mean value for calculating expected departure angle error bound and a standard deviation for calculating expected departure angle error bound; an error occurrence probability per unit of time for calculating expected departure angle error residual risk and an expected failure duration for calculating expected departure angle error residual risk; correlation time of any two pieces of positioning integrity assistance information being independent to each other; a maximum value of IR and a minimum value of IR; or, an expected IR value for calculating positioning integrity calculation result.

Embodiment III

FIG. 6 is a second schematic diagram showing an interaction between a positioning server and a terminal according to an embodiment of the present application. As shown in FIG. 6, the procedure of the positioning server providing the positioning integrity assistance information to the terminal through positioning broadcast message may include the following steps.

Step 1: for the terminal-based downlink cellular network related positioning methods, the positioning server transmits a positioning broadcast message to the terminal, where the positioning broadcast message carries corresponding positioning integrity assistance information associated with downlink positioning.

The positioning integrity assistance information may include one or more of the following: a transmission timing error DNU identifier; a transmission timing error mean value for calculating transmission timing error bound and a transmission timing error standard deviation for calculating transmission timing error bound; a transmission timing error occurrence probability per unit of time for calculating transmission timing error residual risk and an expected failure duration for calculating transmission timing error residual risk; a PRS beam direction error DNU identifier; a mean value for calculating PRS beam direction error bound and a standard deviation for calculating PRS beam direction error bound; an error occurrence probability per unit of time for calculating PRS beam direction error residual risk and an expected failure duration for calculating PRS beam direction error residual risk; a PRS beam angle association information error DNU identifier; a mean value for calculating PRS beam angle association information error bound and a standard deviation for calculating PRS beam angle association information error bound; an error occurrence probability per unit of time for calculating PRS beam angle association information error residual risk and an expected failure duration for calculating PRS beam angle association information error residual risk; a time synchronization information error DNU identifier between a reference TRP and neighboring TRPs; a mean value for calculating time synchronization information error bound between a reference TRP and neighboring TRPs and a standard deviation for calculating time synchronization information error bound between the reference TRP and neighboring TRPs; an error occurrence probability per unit of time for calculating residual risk of time synchronization information error between a reference TRP and neighboring TRPs and an expected failure duration for calculating residual risk of time synchronization information error between the reference TRP and neighboring TRPs; a TRP position association information error DNU identifier; a mean value for calculating TRP position association information error bound and a standard deviation for calculating TRP position association information error bound; an error occurrence probability per unit of time for calculating TRP position association information error residual risk and an expected failure duration for calculating TRP position association information error residual risk; an ARP position association information error DNU identifier; a mean value for calculating ARP position association information error bound and a standard deviation for calculating ARP position association information error bound; an error occurrence probability per unit of time for calculating ARP position association information error residual risk and an expected failure duration for calculating ARP position association information error residual risk; an LOS indication information error DNU identifier; a mean value for calculating LOS indication information error bound and a standard deviation for calculating LOS indication information error bound; an error occurrence probability per unit of time for calculating LOS indication information error residual risk and an expected failure duration for calculating LOS indication information error residual risk; a NLOS indication information error DNU identifier; a mean value for calculating NLOS indication information error bound and a standard deviation for calculating NLOS indication information error bound; an error occurrence probability per unit of time for calculating NLOS indication information error residual risk and an expected failure duration for calculating NLOS indication information error residual risk; an expected arrival angle error DNU identifier; a mean value for calculating expected arrival angle error bound and a standard deviation for calculating expected arrival angle error bound; an error occurrence probability per unit of time for calculating expected arrival angle error residual risk and an expected failure duration for calculating expected arrival angle error residual risk; an expected departure angle error DNU identifier; a mean value for calculating expected departure angle error bound and a standard deviation for calculating expected departure angle error bound; an error occurrence probability per unit of time for calculating expected departure angle error residual risk and an expected failure duration for calculating expected departure angle error residual risk; correlation time of any two pieces of positioning integrity assistance information being independent to each other; a maximum value of IR and a minimum value of IR; or, an expected IR value for calculating positioning integrity calculation result.

Embodiment IV

FIG. 7 is a third schematic diagram showing an interaction between a positioning server and a terminal according to an embodiment of the present application. As shown in FIG. 7, the terminal calculates the integrity of the position estimation result based on the corresponding positioning integrity assistance information, and feeds back the corresponding evaluation result to the positioning server, which may include the following steps.

Step 1: the terminal performs calculation based on the integrity formula by using the positioning integrity assistance information and/or integrity parameters generated at the terminal side to obtain the integrity calculation result.

Step 2: the terminal transmits an LPP message to the positioning server, where the LPP message carries the corresponding positioning estimation result, and/or its corresponding integrity calculation result information, and/or reliability indication identifier information.

The positioning integrity calculation result includes at least one of the following:

an integrity protection level;

an IR value for calculating integrity protection level; or,

an indication identifier of whether a positioning result is reliable.

Further, the integrity protection level may include at least one of the following:

a horizontal integrity protection level; or,

a vertical integrity protection level.

Further, the IR value for calculating the integrity protection level may include at least one of the following:

an IR value for calculating horizontal integrity protection level; or,

an IR value for calculating vertical integrity protection level.

The reliability indication identifier information indicates whether the positioning estimation is reliable, which is obtained by the terminal through a comparison based on the calculated integrity protection level and the value of AL. For example, when PL > AL, the positioning estimation at this time is considered unreliable.

Embodiment V

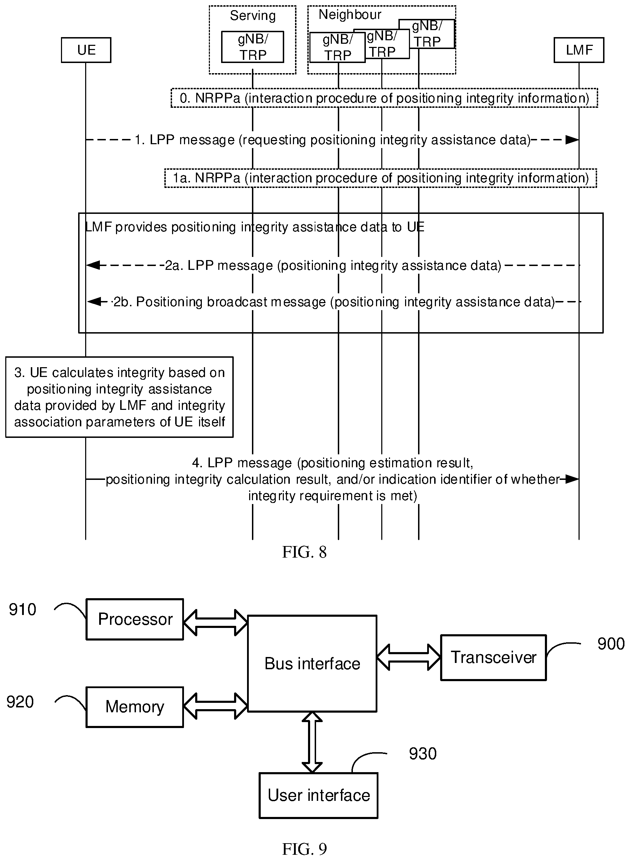

FIG. 8 is a schematic diagram showing an interaction between a terminal, a positioning server and a base station according to an embodiment of the present application. As shown in FIG. 8, the workflow of positioning integrity calculation may include the following steps.

Step 0: optionally, before starting the positioning procedure, the positioning server and the base station interact to obtain positioning integrity assistance information. For the specific procedure, please refer to Embodiment I.

Step 1a: optionally, the terminal transmits an LPP request message carrying indication information for requesting downlink positioning integrity assistance information to the positioning server. For details, please refer to the description of Step 1 in Embodiment II.

Step 1b: optionally (in the absence of Step 0), after the positioning procedure starts, the positioning server and the base station interact to obtain the positioning integrity assistance data information. For the specific procedure, please refer to Embodiment I.

Step 2a: optionally, the positioning server transmits a downlink LPP message to the terminal, where the LPP message includes corresponding positioning integrity assistance information associated with downlink positioning. For the specific procedure, please refer to the description of Step 2 in Embodiment II.

Step 2b: optionally, the positioning server transmits a positioning broadcast message to the terminal, where the positioning broadcast message carries corresponding positioning integrity assistance information associated with downlink positioning. For the specific procedure, please refer to the description of Embodiment III.

Step 3 and step 4: the terminal calculates the integrity of the position estimation result based on the corresponding integrity assistance information, and feeds back the corresponding evaluation result to the positioning server. For the specific procedure, please refer to Embodiment IV.

FIG. 9 is a schematic structural diagram of a terminal according to an embodiment of the present application. As shown in FIG. 9, the terminal includes a memory 920, a transceiver 900, and a processor 910, where the memory 920 is used for storing a computer program, the transceiver 900 is used for receiving and transmitting data under control of the processor 910, and the processor 910 is used for reading the computer program in the memory 920 and performing the following operations: obtaining positioning integrity assistance information transmitted from a positioning server; and determining a positioning integrity calculation result based on the positioning integrity assistance information.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 900 may include multiple elements, i.e., including a transmitter and a receiver, units for providing communication with various other devices over transmission media including wireless channels, wired channels, fiber optic cables, and the like. For different user equipment, a user interface 930 may be an interface capable of externally or internally connecting the required equipment, and the connected equipment includes, but not limited to, a small keypad, a display, a speaker, a microphone, a joystick, and the like.

The processor 910 is responsible for managing the bus architecture and general processing, and the memory 920 may store data used by the processor 910 when performing operations.

In an embodiment, the processor 910 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to execute any of the methods performed by the terminal provided by the embodiments of the present application in accordance with the obtained executable instructions. The processor and memory may also be physically separated.

In an embodiment, the processor 910 is further used for: transmitting a first request message to the positioning server, where the first request message includes indication information for requesting the positioning integrity assistance information.

In an embodiment, the content indicated by the indication information includes at least one of the following: a request to obtain positioning integrity assistance information associated with transmission timing error; a request to obtain positioning integrity assistance information associated with PRS beam direction error; a request to obtain positioning integrity assistance information associated with PRS beam angle association information error; a request to obtain positioning integrity assistance information associated with time synchronization information error between the reference TRP and neighboring TRPs; a request to obtain positioning integrity assistance information associated with TRP position association information error; a request to obtain positioning integrity assistance information associated with ARP position association information error; a request to obtain positioning integrity assistance information associated with LOS indication information error; a request to obtain positioning integrity assistance information associated with NLOS indication information error; a request to obtain positioning integrity assistance information associated with expected arrival angle error; a request to obtain positioning integrity assistance information associated with expected departure angle error; a request to obtain correlation time of any two pieces of positioning integrity assistance information being independent to each other; or, a request to obtain an IR value.

In an embodiment, the processor 910 is further used for: receiving a specific long-term evolution (LTE) positioning protocol (LPP) message transmitted from the positioning server, where the specific LPP message includes the positioning integrity assistance information; or, receiving a positioning broadcast system message transmitted from the positioning server, where the positioning broadcast system message includes the positioning integrity assistance information.

In an embodiment, the processor 910 is further used for: transmitting the positioning integrity calculation result to the positioning server, where the positioning integrity calculation result includes at least one of the following: a positioning integrity protection level; an integrity risk (IR) value for calculating positioning integrity; or, an indication identifier of whether a positioning result is reliable.

In an embodiment, the positioning integrity protection level includes a horizontal positioning integrity protection level and/or a vertical positioning integrity protection level.

In an embodiment, the IR value for calculating positioning integrity includes an IR value for calculating horizontal positioning integrity and/or an IR value for calculating vertical positioning integrity.

In an embodiment, the positioning integrity assistance information includes at least one of the following: a transmission timing error do not use (DNU) identifier; a transmission timing error mean value for calculating transmission timing error bound and a transmission timing error standard deviation for calculating transmission timing error bound; a transmission timing error occurrence probability per unit of time for calculating transmission timing error residual risk and an expected failure duration for calculating transmission timing error residual risk; a positioning reference signal (PRS) beam direction error DNU identifier; a mean value for calculating PRS beam direction error bound and a standard deviation for calculating PRS beam direction error bound; an error occurrence probability per unit of time for calculating PRS beam direction error residual risk and an expected failure duration for calculating PRS beam direction error residual risk; a PRS beam angle association information error DNU identifier; a mean value for calculating PRS beam angle association information error bound and a standard deviation for calculating PRS beam angle association information error bound; an error occurrence probability per unit of time for calculating PRS beam angle association information error residual risk and an expected failure duration for calculating PRS beam angle association information error residual risk; a time synchronization information error DNU identifier between a reference transmission and reception point (TRP) and neighboring TRPs; a mean value for calculating time synchronization information error bound between a reference TRP and neighboring TRPs and a standard deviation for calculating time synchronization information error bound between the reference TRP and neighboring TRPs; an error occurrence probability per unit of time for calculating residual risk of time synchronization information error between a reference TRP and neighboring TRPs and an expected failure duration for calculating residual risk of time synchronization information error between the reference TRP and neighboring TRPs; a TRP position association information error DNU identifier; a mean value for calculating TRP position association information error bound and a standard deviation for calculating TRP position association information error bound; an error occurrence probability per unit of time for calculating TRP position association information error residual risk and an expected failure duration for calculating TRP position association information error residual risk; an address resolution protocol (ARP) position association information error DNU identifier; a mean value for calculating ARP position association information error bound and a standard deviation for calculating ARP position association information error bound; an error occurrence probability per unit of time for calculating ARP position association information error residual risk and an expected failure duration for calculating ARP position association information error residual risk; a line of sight (LOS) indication information error DNU identifier; a mean value for calculating LOS indication information error bound and a standard deviation for calculating LOS indication information error bound; an error occurrence probability per unit of time for calculating LOS indication information error residual risk and an expected failure duration for calculating LOS indication information error residual risk; a non-line of sight (NLOS) indication information error DNU identifier; a mean value for calculating NLOS indication information error bound and a standard deviation for calculating NLOS indication information error bound; an error occurrence probability per unit of time for calculating NLOS indication information error residual risk and an expected failure duration for calculating NLOS indication information error residual risk; an expected arrival angle error DNU identifier; a mean value for calculating expected arrival angle error bound and a standard deviation for calculating expected arrival angle error bound; an error occurrence probability per unit of time for calculating expected arrival angle error residual risk and an expected failure duration for calculating expected arrival angle error residual risk; an expected departure angle error DNU identifier; a mean value for calculating expected departure angle error bound and a standard deviation for calculating expected departure angle error bound; an error occurrence probability per unit of time for calculating expected departure angle error residual risk and an expected failure duration for calculating expected departure angle error residual risk; correlation time of any two pieces of positioning integrity assistance information being independent to each other; a maximum value of integrity risk (IR) and a minimum value of IR; or, an expected IR value for calculating positioning integrity calculation result.

It should be noted here that the above-mentioned terminal provided by the embodiment of the present application may implement all the method steps implemented by the above-mentioned method embodiments in which the execution subject is the terminal, and may achieve the same effects. The same parts and beneficial effects of the embodiments as the above-mentioned corresponding method embodiments are not repeated again.

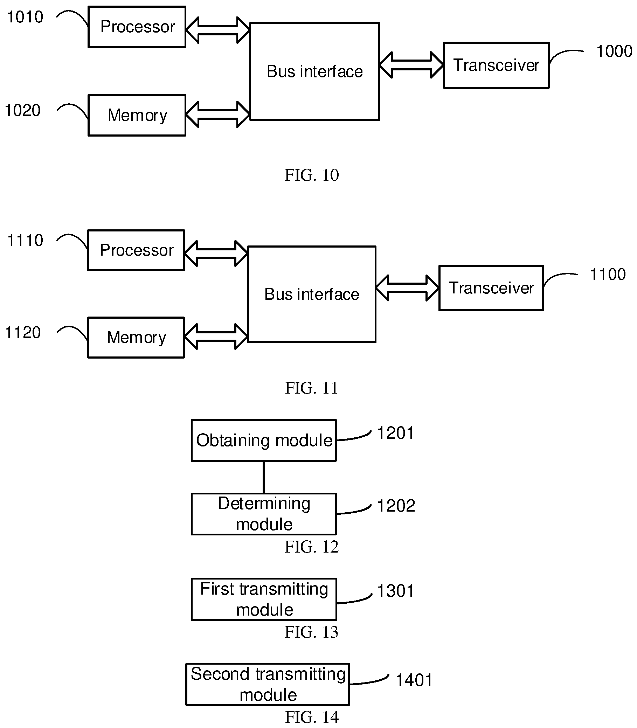

FIG. 10 is a schematic structural diagram of a positioning server according to an embodiment of the present application. As shown in FIG. 10, the positioning server includes a memory 1020, a transceiver 1000, and a processor 1010,

where the memory 1020 is used for storing a computer program, the transceiver 1000 is used for receiving and transmitting data under control of the processor 1010, and the processor 1010 is used for reading the computer program in the memory 1020 and performing the following operations: transmitting positioning integrity assistance information to a terminal, where the positioning integrity assistance information is used to determine a positioning integrity calculation result.

In FIG. 10, a bus architecture may include any number of interconnected buses and bridges, which are linked together through various circuits of one or more processors represented by the processor 1010 and one or more memories represented by the memory 1020. The bus architecture may also link together various other circuits, such as peripherals, voltage regulators, and power management circuits, etc., which are well known in the art, and therefore are not further described in the present application. The bus interface provides an interface. The transceiver 1000 may include multiple elements, i.e., including a transmitter and a receiver, units for providing communication with various other devices over transmission media including wireless channels, wired channels, fiber optic cables, and the like. The processor 1010 is responsible for managing the bus architecture and general processing, and the memory 1020 may store data used by the processor 1010 when performing operations.

The processor 1010 may be a central processing unit (CPU), an application specific integrated circuit (ASIC), a field-programmable gate array (FPGA), or a complex programmable logic device (CPLD), the processor may also use a multi-core architecture.

In an embodiment, the processor 1010 is further used for: receiving a first request message transmitted from the terminal, where the first request message includes indication information for requesting the positioning integrity assistance information.

In an embodiment, the processor 1010 is further used for: receiving a *NewRadioPositioningProtocolAnnex* (NRPPa) message transmitted from a base station, where the NRPPa message includes the positioning integrity assistance information.

In an embodiment, the processor 1010 is further used for: transmitting a second request message to the base station, where the second request message includes indication information for requesting the positioning integrity assistance information.

In an embodiment, the processor 1010 is further used for: transmitting a specific long-term evolution (LTE) positioning protocol (LPP) message to the terminal, where the specific LPP message includes the positioning integrity assistance information; or, transmitting a positioning broadcast system message to the terminal, where the positioning broadcast system message includes the positioning integrity assistance information.

In an embodiment, the processor 1010 is further used for: receiving a positioning integrity calculation result transmitted from the terminal, where the positioning integrity calculation result includes at least one of the following: a positioning integrity protection level; an integrity risk (IR) value for calculating positioning integrity; or, an indication identifier of whether a positioning calculation is reliable.

It should be noted here that the above-mentioned positioning server provided by the embodiment of the present application may implement all the method steps implemented by the above-mentioned method embodiments in which the execution subject is the positioning server, and may achieve the same effects. The same parts and beneficial effects of the embodiments as the above-mentioned corresponding method embodiments are not repeated again.

FIG. 11 is a schematic structural diagram of a base station according to an embodiment of the present application. As shown in FIG. 11, the base station includes a memory 1120, a transceiver 1100, and a processor 1110,

where the memory 1120 is used for storing a computer program, the transceiver 1100 is used for receiving and transmitting data under control of the processor 1110, and the processor 1110 is used for reading the computer program in the memory 1120 and performing the following operations:

transmitting a *NewRadioPositioningProtocolAnnex*

(NRPPa) message to a positioning server, where the NRPPa message includes positioning integrity assistance information, and the positioning integrity assistance information is used to determine a positioning integrity calculation result.

In FIG. 11, a bus architecture may include any number of interconnected buses and bridges, which are linked together through various circuits of one or more processors represented by the processor 1110 and one or more memories represented by the memory 1120. The bus architecture may also link together various other circuits, such as peripherals, voltage regulators, and power management circuits, etc., which are well known in the art, and therefore are not further described in the present application. The bus interface provides an interface. The transceiver 1100 may include multiple elements, i.e., including a transmitter and a receiver, units for providing communication with various other devices over transmission media including wireless channels, wired channels, fiber optic cables, and the like. The processor 1110 is responsible for managing the bus architecture and general processing, and the memory 1120 may store data used by the processor 1110 when performing operations.

The processor 1110 may be a central processing unit (CPU), an application specific integrated circuit (ASIC), a field-programmable gate array (FPGA), or a complex programmable logic device (CPLD), the processor may also use a multi-core architecture.

In an embodiment, the processor 1110 is further used for: receiving a second request message transmitted from the positioning server, where the second request message includes indication information for requesting the positioning integrity assistance information.

It should be noted here that the above-mentioned base station provided by the embodiment of the present application may implement all the method steps implemented by the above-mentioned method embodiments in which the execution subject is the base station, and may achieve the same effects. The same parts and beneficial effects of the embodiments as the above-mentioned corresponding method embodiments are not repeated again.

FIG. 12 is a first schematic structural diagram of an apparatus for determining positioning integrity according to an embodiment of the present application, where the apparatus includes:

> an obtaining unit 1201, used for obtaining positioning integrity assistance information transmitted from a positioning server; and

> a determining unit 1202, used for determining a positioning integrity calculation result based on the positioning integrity assistance information.

In an embodiment, the apparatus further includes:

a first transmitting unit, used for transmitting a first request message to the positioning server, where the first request message includes indication information for requesting the positioning integrity assistance information.

In an embodiment, a content indicated by the indication information includes at least one of the following: a request to obtain positioning integrity assistance information associated with transmission timing error; a request to obtain positioning integrity assistance information associated with positioning reference signal (PRS) beam direction error; a request to obtain positioning integrity assistance information associated with PRS beam angle association information error; a request to obtain positioning integrity assistance information associated with time synchronization information error between a reference transmission and reception point (TRP) and neighboring TRPs; a request to obtain positioning integrity assistance information associated with TRP position association information error; a request to obtain positioning integrity assistance information associated with address resolution protocol (ARP) position association information error; a request to obtain positioning integrity assistance information associated with line of sight (LOS) indication information error; a request to obtain positioning integrity assistance information associated with non-line of sight (NLOS) indication information error; a request to obtain positioning integrity assistance information associated with expected arrival angle error; a request to obtain positioning integrity assistance information associated with expected departure angle error; a request to obtain correlation time of any two pieces of positioning integrity assistance information being independent to each other; or, a request to obtain an integrity risk (IR) value.

In an embodiment, the obtaining unit is further used for:

> receiving a specific long-term evolution (LTE) positioning protocol (LPP) message transmitted from the positioning server, where the specific LPP message includes the positioning integrity assistance information; or,

> receiving a positioning broadcast system message transmitted from the positioning server, where the positioning broadcast system message includes the positioning integrity assistance information.

In an embodiment, the apparatus further includes:

> a transmitting unit, used for transmitting the positioning integrity calculation result to the positioning server,

> where the positioning integrity calculation result includes at least one of the following:

a positioning integrity protection level;

an integrity risk (IR) value for calculating positioning integrity; or,

an indication identifier of whether a positioning result is reliable.

In an embodiment, the positioning integrity protection level includes a horizontal positioning integrity protection level and/or a vertical positioning integrity protection level.

In an embodiment, the IR value for calculating positioning integrity includes an IR value for calculating horizontal positioning integrity and/or an IR value for calculating vertical positioning integrity.

In an embodiment, the positioning integrity assistance information includes at least one of the following: a transmission timing error do not use (DNU) identifier; a transmission timing error mean value for calculating transmission timing error bound and a transmission timing error standard deviation for calculating transmission timing error bound; a transmission timing error occurrence probability per unit of time for calculating transmission timing error residual risk and an expected failure duration for calculating transmission timing error residual risk; a positioning reference signal (PRS) beam direction error DNU identifier; a mean value for calculating PRS beam direction error bound and a standard deviation for calculating PRS beam direction error bound; an error occurrence probability per unit of time for calculating PRS beam direction error residual risk and an expected failure duration for calculating PRS beam direction error residual risk; a PRS beam angle association information error DNU identifier; a mean value for calculating PRS beam angle association information error bound and a standard deviation for calculating PRS beam angle association information error bound; an error occurrence probability per unit of time for calculating PRS beam angle association information error residual risk and an expected failure duration for calculating PRS beam angle association information error residual risk; a time synchronization information error DNU identifier between a reference transmission and reception point (TRP) and neighboring TRPs; a mean value for calculating time synchronization information error bound between a reference TRP and neighboring TRPs and a standard deviation for calculating time synchronization information error bound between the reference TRP and neighboring TRPs; an error occurrence probability per unit of time for calculating residual risk of time synchronization information error between a reference TRP and neighboring TRPs and an expected failure duration for calculating residual risk of time synchronization information error between the reference TRP and neighboring TRPs; a TRP position association information error DNU identifier; a mean value for calculating TRP position association information error bound and a standard deviation for calculating TRP position association information error bound; an error occurrence probability per unit of time for calculating TRP position association information error residual risk and an expected failure duration for calculating TRP position association information error residual risk; an address resolution protocol (ARP) position association information error DNU identifier; a mean value for calculating ARP position association information error bound and a standard deviation for calculating ARP position association information error bound; an error occurrence probability per unit of time for calculating ARP position association information error residual risk and an expected failure duration for calculating ARP position association information error residual risk; a line of sight (LOS) indication information error DNU identifier; a mean value for calculating LOS indication information error bound and a standard deviation for calculating LOS indication information error bound; an error occurrence probability per unit of time for calculating LOS indication information error residual risk and an expected failure duration for calculating LOS indication information error residual risk; a non-line of sight (NLOS) indication information error DNU identifier; a mean value for calculating NLOS indication information error bound and a standard deviation for calculating NLOS indication information error bound; an error occurrence probability per unit of time for calculating NLOS indication information error residual risk and an expected failure duration for calculating NLOS indication information error residual risk; an expected arrival angle error DNU identifier; a mean value for calculating expected arrival angle error bound and a standard deviation for calculating expected arrival angle error bound; an error occurrence probability per unit of time for calculating expected arrival angle error residual risk and an expected failure duration for calculating expected arrival angle error residual risk; an expected departure angle error DNU identifier; a mean value for calculating expected departure angle error bound and a standard deviation for calculating expected departure angle error bound; an error occurrence probability per unit of time for calculating expected departure angle error residual risk and an expected failure duration for calculating expected departure angle error residual risk; correlation time of any two pieces of positioning integrity assistance information being independent to each other; a maximum value of integrity risk (IR) and a minimum value of IR; or, an expected IR value for calculating positioning integrity calculation result.

It should be noted here that the above-mentioned apparatus provided by the embodiment of the present application may implement all the method steps implemented by the above-mentioned method embodiments in which the execution subject is the terminal, and may achieve the same effects. The same parts and beneficial effects of the embodiments as the above-mentioned corresponding method embodiments are not repeated again.

FIG. 13 is a second schematic structural diagram of an apparatus for determining positioning integrity according to an embodiment of the present application, where the apparatus includes:

a first transmitting unit 1301, used for transmitting positioning integrity assistance information to a terminal, where the positioning integrity assistance information is used to determine a positioning integrity calculation result.

In an embodiment, the apparatus further includes:

a first receiving unit, used for receiving a first request message transmitted from the terminal, where the first request message includes indication information for requesting the positioning integrity assistance information.

In an embodiment, the apparatus further includes:

a second receiving unit, used for receiving a *NewRadioPositioningProtocolAnnex* (NRPPa) message transmitted from a base station, where the NRPPa message includes the positioning integrity assistance information.

In an embodiment, the apparatus further includes:

a second transmitting unit, used for transmitting a second request message to the base station, where the second request message includes indication information for requesting the positioning integrity assistance information.

In an embodiment, the first transmitting unit 1301 is further used for:

transmitting a specific long-term evolution (LTE) positioning protocol (LPP) message to the terminal, where the specific LPP message includes the positioning integrity assistance information; or,

transmitting a positioning broadcast system message to the terminal, where the positioning broadcast system message includes the positioning integrity assistance information.

In an embodiment, the apparatus further includes:

a third receiving unit, used for receiving a positioning integrity calculation result transmitted from the terminal,

where the positioning integrity calculation result includes at least one of the following:

a positioning integrity protection level;

an integrity risk (IR) value for calculating positioning integrity; or,

an indication identifier of whether a positioning calculation is reliable.

It should be noted here that the above-mentioned apparatus provided by the embodiment of the present application may implement all the method steps implemented by the above-mentioned method embodiments in which the execution subject is the positioning server, and may achieve the same effects. The same parts and beneficial effects of the embodiments as the above-mentioned corresponding method embodiments are not repeated again.

FIG. 14 is a third schematic structural diagram of an apparatus for determining positioning integrity according to an embodiment of the present application, where the apparatus includes:

a second transmitting unit, used for transmitting a *NewRadioPositioningProtocolAnnex* (NRPPa) message to a positioning server, where the NRPPa message includes positioning integrity assistance information, and the positioning integrity assistance information is used to determine a positioning integrity calculation result.

In an embodiment, the apparatus further includes:

a receiving unit, used for receiving a second request message transmitted from the positioning server, where the second request message includes indication information for requesting the positioning integrity assistance information.

It should be noted here that the above-mentioned apparatus provided by the embodiment of the present application may implement all the method steps implemented by the above-mentioned method embodiments in which the execution subject is the base station, and may achieve the same effects. The same parts and beneficial effects of the embodiments as the above-mentioned corresponding method embodiments are not repeated again.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor-readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a U disk, a mobile hard disk, a read-only memory (ROM), a random access memory (RAM), a magnetic disk, or a compact disk.

On the other hand, an embodiment of the present application further provides a processor-readable storage medium storing a computer program, where the computer program is used to cause a processor to perform the methods provided by the above embodiments. The method includes: obtaining positioning integrity assistance information transmitted from a positioning server; and determining a positioning integrity calculation result based on the positioning integrity assistance information.

The computer readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatuses (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

**Claims**

1. A method for determining positioning integrity, performed by a terminal, comprising:

    obtaining positioning integrity assistance information transmitted from a positioning server; and
    determining a positioning integrity calculation result based on the positioning integrity assistance information.

2. The method of claim 1, wherein before obtaining the positioning integrity assistance information transmitted from the positioning server, the method further comprises:
   transmitting a first request message to the positioning server, wherein the first request message comprises indication information for requesting the positioning integrity assistance information.

3. The method of claim 2, wherein a content indicated by the indication information comprises at least one of the following:

    a request to obtain positioning integrity assistance information associated with transmission timing error;
    a request to obtain positioning integrity assistance information associated with positioning reference signal, PRS, beam direction error;
    a request to obtain positioning integrity assistance information associated with PRS beam angle association information error;
    a request to obtain positioning integrity assistance information associated with time synchronization information error between a reference transmission and reception point, TRP, and neighboring TRPs;

a request to obtain positioning integrity assistance information associated with TRP position association information error;

a request to obtain positioning integrity assistance information associated with address resolution protocol, ARP, position association information error;

a request to obtain positioning integrity assistance information associated with line of sight, LOS, indication information error;

a request to obtain positioning integrity assistance information associated with non-line of sight, NLOS, indication information error;

a request to obtain positioning integrity assistance information associated with expected arrival angle error;

a request to obtain positioning integrity assistance information associated with expected departure angle error;

a request to obtain correlation time of any two pieces of positioning integrity assistance information being independent to each other; or,

a request to obtain an integrity risk, IR, value.

4. The method of claim 1, wherein obtaining the positioning integrity assistance information transmitted from the positioning server comprises:

receiving a specific long-term evolution, LTE, positioning protocol, LPP, message transmitted from the positioning server, wherein the specific LPP message comprises the positioning integrity assistance information; or,

receiving a positioning broadcast system message transmitted from the positioning server, wherein the positioning broadcast system message comprises the positioning integrity assistance information.

5. The method of claim 1, wherein after determining the positioning integrity calculation result, the method further comprises:

transmitting the positioning integrity calculation result to the positioning server,

wherein the positioning integrity calculation result comprises at least one of the following:

a positioning integrity protection level;

an integrity risk, IR, value for calculating positioning integrity; or,

an indication identifier of whether a positioning result is reliable.

6. The method of claim 5, wherein the positioning integrity protection level comprises a horizontal positioning integrity protection level and/or a vertical positioning integrity protection level.

7. The method of claim 5, wherein the IR value for calculating positioning integrity comprises an IR value for calculating horizontal positioning integrity and/or an IR value for calculating vertical positioning integrity.

8. The method of any of claims 1 to 7, wherein the positioning integrity assistance information comprises at least one of the following:

a transmission timing error do not use, DNU, identifier;

a transmission timing error mean value for calculating transmission timing error bound and a transmission timing error standard deviation for calculating transmission timing error bound;

a transmission timing error occurrence probability per unit of time for calculating transmission timing error residual risk and an expected failure duration for calculating transmission timing error residual risk;

a positioning reference signal, PRS, beam direction error DNU identifier;

a mean value for calculating PRS beam direction error bound and a standard deviation for calculating PRS beam direction error bound;

an error occurrence probability per unit of time for calculating PRS beam direction error residual risk and an expected failure duration for calculating PRS beam direction error residual risk;

a PRS beam angle association information error DNU identifier;

a mean value for calculating PRS beam angle association information error bound and a standard deviation for calculating PRS beam angle association information error bound;

an error occurrence probability per unit of time for calculating PRS beam angle association information error residual risk and an expected failure duration for calculating PRS beam angle association information error residual risk;

a time synchronization information error DNU identifier between a reference transmission and reception point, TRP, and neighboring TRPs;

a mean value for calculating time synchronization information error bound between a reference TRP and neighboring TRPs and a standard deviation for calculating time synchronization information error bound between the reference TRP and neighboring TRPs;

an error occurrence probability per unit of time for calculating residual risk of time synchronization information error between a reference TRP and neighboring TRPs and an expected failure duration for calculating residual risk of time synchronization information error between the reference TRP and neighboring TRPs;
a TRP position association information error DNU identifier;
a mean value for calculating TRP position association information error bound and a standard deviation for calculating TRP position association information error bound;
an error occurrence probability per unit of time for calculating TRP position association information error residual risk and an expected failure duration for calculating TRP position association information error residual risk;
an address resolution protocol, ARP, position association information error DNU identifier;
a mean value for calculating ARP position association information error bound and a standard deviation for calculating ARP position association information error bound;
an error occurrence probability per unit of time for calculating ARP position association information error residual risk and an expected failure duration for calculating ARP position association information error residual risk;
a line of sight, LOS, indication information error DNU identifier;
a mean value for calculating LOS indication information error bound and a standard deviation for calculating LOS indication information error bound;
an error occurrence probability per unit of time for calculating LOS indication information error residual risk and an expected failure duration for calculating LOS indication information error residual risk;
a non-line of sight, NLOS, indication information error DNU identifier;
a mean value for calculating NLOS indication information error bound and a standard deviation for calculating NLOS indication information error bound;
an error occurrence probability per unit of time for calculating NLOS indication information error residual risk and an expected failure duration for calculating NLOS indication information error residual risk;
an expected arrival angle error DNU identifier;
a mean value for calculating expected arrival angle error bound and a standard deviation for calculating expected arrival angle error bound;
an error occurrence probability per unit of time for calculating expected arrival angle error residual risk and an expected failure duration for calculating expected arrival angle error residual risk;
an expected departure angle error DNU identifier;
a mean value for calculating expected departure angle error bound and a standard deviation for calculating expected departure angle error bound;
an error occurrence probability per unit of time for calculating expected departure angle error residual risk and an expected failure duration for calculating expected departure angle error residual risk;
correlation time of any two pieces of positioning integrity assistance information being independent to each other;
a maximum value of integrity risk, IR, and a minimum value of IR; or,
an expected IR value for calculating positioning integrity calculation result.

9. A method for determining positioning integrity, performed by a positioning server, comprising:
transmitting positioning integrity assistance information to a terminal, wherein the positioning integrity assistance information is used to determine a positioning integrity calculation result.

10. The method of claim 9, wherein before transmitting the positioning integrity assistance information to the terminal, the method further comprises:
receiving a first request message transmitted from the terminal, wherein the first request message comprises indication information for requesting the positioning integrity assistance information.

11. The method of claim 9, wherein before transmitting the positioning integrity assistance information to the terminal, the method further comprises:
receiving a *NewRadioPositioningProtocolAnnex,* NRPPa, message transmitted from a base station, wherein the NRPPa message comprises the positioning integrity assistance information.

12. The method of claim 11, wherein before receiving the NRPPa message transmitted from the base station, the method further comprises:
transmitting a second request message to the base station, wherein the second request message comprises indication information for requesting the positioning integrity assistance information.

13. The method of claim 9, wherein transmitting the positioning integrity assistance information to the terminal comprises:

transmitting a specific long-term evolution, LTE, positioning protocol, LPP, message to the terminal, wherein the specific LPP message comprises the positioning integrity assistance information; or,
transmitting a positioning broadcast system message to the terminal, wherein the positioning broadcast system message comprises the positioning integrity assistance information.

14. The method of claim 9, wherein after transmitting the positioning integrity assistance information to the terminal, the method further comprises:

receiving a positioning integrity calculation result transmitted from the terminal, wherein the positioning integrity calculation result comprises at least one of the following:

a positioning integrity protection level; an integrity risk, IR, value for calculating positioning integrity; or, an indication identifier of whether a positioning calculation is reliable.

15. A method for determining positioning integrity, performed by a base station, comprising: transmitting a *NewRadioPositioningProtocolAnnex,* NRPPa, message to a positioning server, wherein the NRPPa message comprises positioning integrity assistance information, and the positioning integrity assistance information is used to determine a positioning integrity calculation result.

16. The method of claim 15, wherein before transmitting the NRPPa message to the positioning server, the method further comprises: receiving a second request message transmitted from the positioning server, wherein the second request message comprises indication information for requesting the positioning integrity assistance information.

17. A terminal, comprising a memory, a transceiver, and a processor, wherein the memory is used for storing a computer program, the transceiver is used for receiving and transmitting data under control of the processor, and the processor is used for reading the computer program in the memory and performing the following operations:

obtaining positioning integrity assistance information transmitted from a positioning server; and determining a positioning integrity calculation result based on the positioning integrity assistance information.

18. The terminal of claim 17, wherein before obtaining the positioning integrity assistance information transmitted from the positioning server, the operations further comprise: transmitting a first request message to the positioning server, wherein the first request message comprises indication information for requesting the positioning integrity assistance information.

19. The terminal of claim 18, wherein a content indicated by the indication information comprises at least one of the following:

a request to obtain positioning integrity assistance information associated with transmission timing error; a request to obtain positioning integrity assistance information associated with positioning reference signal, PRS, beam direction error; a request to obtain positioning integrity assistance information associated with PRS beam angle association information error; a request to obtain positioning integrity assistance information associated with time synchronization information error between a reference transmission and reception point, TRP, and neighboring TRPs; a request to obtain positioning integrity assistance information associated with TRP position association information error; a request to obtain positioning integrity assistance information associated with address resolution protocol, ARP, position association information error; a request to obtain positioning integrity assistance information associated with line of sight, LOS, indication information error; a request to obtain positioning integrity assistance information associated with non-line of sight, NLOS, indication information error; a request to obtain positioning integrity assistance information associated with expected arrival angle error; a request to obtain positioning integrity assistance information associated with expected departure angle error; a request to obtain correlation time of any two pieces of positioning integrity assistance information being independent to each other; or, a request to obtain an integrity risk, IR, value.

20. The terminal of claim 17, wherein obtaining the positioning integrity assistance information transmitted from the positioning server comprises:

receiving a specific long-term evolution, LTE, positioning protocol, LPP, message transmitted from the positioning server, wherein the specific LPP message comprises the positioning integrity assistance information; or, receiving a positioning broadcast system message transmitted from the positioning server, wherein the positioning broadcast system message comprises the positioning integrity assistance information.

21. The terminal of claim 17, wherein after determining the positioning integrity calculation result, the operations further comprise:

transmitting the positioning integrity calculation result to the positioning server, wherein the positioning integrity calculation result comprises at least one of the following:

a positioning integrity protection level; an integrity risk, IR, value for calculating positioning integrity; or, an indication identifier of whether a positioning result is reliable.

22. The terminal of claim 21, wherein the positioning integrity protection level comprises a horizontal positioning integrity protection level and/or a vertical positioning integrity protection level.

23. The terminal of claim 21, wherein the IR value for calculating positioning integrity comprises an IR value for calculating horizontal positioning integrity and/or an IR value for calculating vertical positioning integrity.

24. The terminal of any of claims 17 to 23, wherein the positioning integrity assistance information comprises at least one of the following:

a transmission timing error do not use, DNU, identifier; a transmission timing error mean value for calculating transmission timing error bound and a transmission timing error standard deviation for calculating transmission timing error bound; a transmission timing error occurrence probability per unit of time for calculating transmission timing error residual risk and an expected failure duration for calculating transmission timing error residual risk; a positioning reference signal, PRS, beam direction error DNU identifier; a mean value for calculating PRS beam direction error bound and a standard deviation for calculating PRS beam direction error bound; an error occurrence probability per unit of time for calculating PRS beam direction error residual risk and an expected failure duration for calculating PRS beam direction error residual risk; a PRS beam angle association information error DNU identifier; a mean value for calculating PRS beam angle association information error bound and a standard deviation for calculating PRS beam angle association information error bound; an error occurrence probability per unit of time for calculating PRS beam angle association information error residual risk and an expected failure duration for calculating PRS beam angle association information error residual risk; a time synchronization information error DNU identifier between a reference transmission and reception point, TRP, and neighboring TRPs; a mean value for calculating time synchronization information error bound between a reference TRP and neighboring TRPs and a standard deviation for calculating time synchronization information error bound between the reference TRP and neighboring TRPs; an error occurrence probability per unit of time for calculating residual risk of time synchronization information error between a reference TRP and neighboring TRPs and an expected failure duration for calculating residual risk of time synchronization information error between the reference TRP and neighboring TRPs; a TRP position association information error DNU identifier; a mean value for calculating TRP position association information error bound and a standard deviation for calculating TRP position association information error bound; an error occurrence probability per unit of time for calculating TRP position association information error residual risk and an expected failure duration for calculating TRP position association information error residual risk; an address resolution protocol, ARP, position association information error DNU identifier; a mean value for calculating ARP position association information error bound and a standard deviation for calculating ARP position association information error bound; an error occurrence probability per unit of time for calculating ARP position association information error residual risk and an expected failure duration for calculating ARP position association information error residual risk; a line of sight, LOS, indication information error DNU identifier; a mean value for calculating LOS indication information error bound and a standard deviation for calculating LOS indication information error bound; an error occurrence probability per unit of time for calculating LOS indication information error residual risk and an expected failure duration for calculating LOS indication information error residual risk; a non-line of sight, NLOS, indication information error DNU identifier; a mean value for calculating NLOS indication information error bound and a standard deviation for calculating NLOS indication information error bound;

an error occurrence probability per unit of time for calculating NLOS indication information error residual risk and an expected failure duration for calculating NLOS indication information error residual risk;

an expected arrival angle error DNU identifier;

a mean value for calculating expected arrival angle error bound and a standard deviation for calculating expected arrival angle error bound;

an error occurrence probability per unit of time for calculating expected arrival angle error residual risk and an expected failure duration for calculating expected arrival angle error residual risk;

an expected departure angle error DNU identifier;

a mean value for calculating expected departure angle error bound and a standard deviation for calculating expected departure angle error bound;

an error occurrence probability per unit of time for calculating expected departure angle error residual risk and an expected failure duration for calculating expected departure angle error residual risk;

correlation time of any two pieces of positioning integrity assistance information being independent to each other;

a maximum value of integrity risk, IR, and a minimum value of IR; or,

an expected IR value for calculating positioning integrity calculation result.

25. A positioning server, comprising a memory, a transceiver, and a processor,

wherein the memory is used for storing a computer program, the transceiver is used for receiving and transmitting data under control of the processor, and the processor is used for reading the computer program in the memory and performing the following operations:

transmitting positioning integrity assistance information to a terminal, wherein the positioning integrity assistance information is used to determine a positioning integrity calculation result.

26. The positioning server of claim 25, wherein before transmitting the positioning integrity assistance information to the terminal, the operations further comprise:

receiving a first request message transmitted from the terminal, wherein the first request message comprises indication information for requesting the positioning integrity assistance information.

27. The positioning server of claim 25, wherein before transmitting the positioning integrity assistance information to the terminal, the operations further comprise:

receiving a *NewRadioPositioningProtocolAnnex,* NRPPa, message transmitted from a base station, wherein the NRPPa message comprises the positioning integrity assistance information.

28. The positioning server of claim 27, wherein before receiving the NRPPa message transmitted from the base station, the operations further comprise:

transmitting a second request message to the base station, wherein the second request message comprises indication information for requesting the positioning integrity assistance information.

29. The positioning server of claim 25, wherein transmitting the positioning integrity assistance information to the terminal comprises:

transmitting a specific long-term evolution, LTE, positioning protocol, LPP, message to the terminal, wherein the specific LPP message comprises the positioning integrity assistance information; or,

transmitting a positioning broadcast system message to the terminal, wherein the positioning broadcast system message comprises the positioning integrity assistance information.

30. The positioning server of claim 25, wherein after transmitting the positioning integrity assistance information to the terminal, the operations further comprise:

receiving a positioning integrity calculation result transmitted from the terminal,

wherein the positioning integrity calculation result comprises at least one of the following:

a positioning integrity protection level;
an integrity risk, IR, value for calculating positioning integrity; or,
an indication identifier of whether a positioning calculation is reliable.

31. A base station, comprising a memory, a transceiver, and a processor,

wherein the memory is used for storing a computer program, the transceiver is used for receiving and transmitting data under control of the processor, and the processor is used for reading the computer program in the memory and performing the following operations:

transmitting a *NewRadioPositioningProtocolAnnex,* NRPPa, message to a positioning server, wherein the NRPPa message comprises positioning integrity assistance information, and the positioning integrity assistance information is used to determine a positioning integrity calculation result.

32. The base station of claim 31, wherein before transmitting the NRPPa message to the positioning server, the operations further comprise:

receiving a second request message transmitted from the positioning server, wherein the second request message comprises indication information for requesting the positioning integrity assistance information.

33. An apparatus for determining positioning integrity, comprising:

an obtaining unit, used for obtaining positioning integrity assistance information transmitted from a positioning server; and
a determining unit, used for determining a positioning integrity calculation result based on the positioning integrity assistance information.

34. The apparatus of claim 33, further comprising:
a first transmitting unit, used for transmitting a first request message to the positioning server, wherein the first request message comprises indication information for requesting the positioning integrity assistance information.

35. The apparatus of claim 34, wherein a content indicated by the indication information comprises at least one of the following:

a request to obtain positioning integrity assistance information associated with transmission timing error;
a request to obtain positioning integrity assistance information associated with positioning reference signal, PRS, beam direction error;
a request to obtain positioning integrity assistance information associated with PRS beam angle association information error;
a request to obtain positioning integrity assistance information associated with time synchronization information error between a reference transmission and reception point, TRP, and neighboring TRPs;
a request to obtain positioning integrity assistance information associated with TRP position association information error;
a request to obtain positioning integrity assistance information associated with address resolution protocol, ARP, position association information error;
a request to obtain positioning integrity assistance information associated with line of sight, LOS, indication information error;

a request to obtain positioning integrity assistance information associated with non-line of sight, NLOS, indication information error;
a request to obtain positioning integrity assistance information associated with expected arrival angle error;
a request to obtain positioning integrity assistance information associated with expected departure angle error;
a request to obtain correlation time of any two pieces of positioning integrity assistance information being independent to each other; or,
a request to obtain an integrity risk, IR, value.

36. The apparatus of claim 33, wherein the obtaining unit is further used for:

receiving a specific long-term evolution, LTE, positioning protocol, LPP, message transmitted from the positioning server, wherein the specific LPP message comprises the positioning integrity assistance information; or,
receiving a positioning broadcast system message transmitted from the positioning server, wherein the positioning broadcast system message comprises the positioning integrity assistance information.

37. The apparatus of claim 33, further comprising:

a transmitting unit, used for transmitting the positioning integrity calculation result to the positioning server,
wherein the positioning integrity calculation result comprises at least one of the following:

a positioning integrity protection level;
an integrity risk, IR, value for calculating positioning integrity; or,
an indication identifier of whether a positioning result is reliable.

38. The apparatus of claim 37, wherein the positioning integrity protection level comprises a horizontal positioning integrity protection level and/or a vertical positioning integrity protection level.

39. The apparatus of claim 37, wherein the IR value for calculating positioning integrity comprises an IR value for calculating horizontal positioning integrity and/or an IR value for calculating vertical positioning integrity.

40. The apparatus of any of claims 33 to 39, wherein the positioning integrity assistance information comprises at least one of the following:

a transmission timing error do not use, DNU,

identifier;

a transmission timing error mean value for calculating transmission timing error bound and a transmission timing error standard deviation for calculating transmission timing error bound;

a transmission timing error occurrence probability per unit of time for calculating transmission timing error residual risk and an expected failure duration for calculating transmission timing error residual risk;

a positioning reference signal, PRS, beam direction error DNU identifier;

a mean value for calculating PRS beam direction error bound and a standard deviation for calculating PRS beam direction error bound;

an error occurrence probability per unit of time for calculating PRS beam direction error residual risk and an expected failure duration for calculating PRS beam direction error residual risk;

a PRS beam angle association information error DNU identifier;

a mean value for calculating PRS beam angle association information error bound and a standard deviation for calculating PRS beam angle association information error bound;

an error occurrence probability per unit of time for calculating PRS beam angle association information error residual risk and an expected failure duration for calculating PRS beam angle association information error residual risk;

a time synchronization information error DNU identifier between a reference transmission and reception point, TRP, and neighboring TRPs;

a mean value for calculating time synchronization information error bound between a reference TRP and neighboring TRPs and a standard deviation for calculating time synchronization information error bound between the reference TRP and neighboring TRPs;

an error occurrence probability per unit of time for calculating residual risk of time synchronization information error between a reference TRP and neighboring TRPs and an expected failure duration for calculating residual risk of time synchronization information error between the reference TRP and neighboring TRPs;

a TRP position association information error DNU identifier;

a mean value for calculating TRP position association information error bound and a standard deviation for calculating TRP position association information error bound;

an error occurrence probability per unit of time for calculating TRP position association information error residual risk and an expected failure duration for calculating TRP position association information error residual risk;

an address resolution protocol, ARP, position association information error DNU identifier;

a mean value for calculating ARP position association information error bound and a standard deviation for calculating ARP position association information error bound;

an error occurrence probability per unit of time for calculating ARP position association information error residual risk and an expected failure duration for calculating ARP position association information error residual risk;

a line of sight, LOS, indication information error DNU identifier;

a mean value for calculating LOS indication information error bound and a standard deviation for calculating LOS indication information error bound;

an error occurrence probability per unit of time for calculating LOS indication information error residual risk and an expected failure duration for calculating LOS indication information error residual risk;

a non-line of sight, NLOS, indication information error DNU identifier;

a mean value for calculating NLOS indication information error bound and a standard deviation for calculating NLOS indication information error bound;

an error occurrence probability per unit of time for calculating NLOS indication information error residual risk and an expected failure duration for calculating NLOS indication information error residual risk;

an expected arrival angle error DNU identifier;

a mean value for calculating expected arrival angle error bound and a standard deviation for calculating expected arrival angle error bound;

an error occurrence probability per unit of time for calculating expected arrival angle error residual risk and an expected failure duration for calculating expected arrival angle error residual risk;

an expected departure angle error DNU identifier;

a mean value for calculating expected departure angle error bound and a standard deviation for calculating expected departure angle error bound;

an error occurrence probability per unit of time for calculating expected departure angle error residual risk and an expected failure duration for calculating expected departure angle error residual risk;

correlation time of any two pieces of positioning integrity assistance information being independent to each other;

a maximum value of integrity risk, IR, and a minimum value of IR; or,

an expected IR value for calculating positioning integrity calculation result.

41. An apparatus for determining positioning integrity, comprising:
a first transmitting unit, used for transmitting positioning integrity assistance information to a terminal, wherein the positioning integrity assistance information is used to determine a positioning integrity calculation result.

42. The apparatus of claim 41, further comprising:
a first receiving unit, used for receiving a first request message transmitted from the terminal, wherein the first request message comprises indication information for requesting the positioning integrity assistance information.

43. The apparatus of claim 41, further comprising:
a second receiving unit, used for receiving a *NewRadioPositioningProtocolAnnex,* NRPPa, message transmitted from a base station, wherein the NRPPa message comprises the positioning integrity assistance information.

44. The apparatus of claim 43, further comprising:
a second transmitting unit, used for transmitting a second request message to the base station, wherein the second request message comprises indication information for requesting the positioning integrity assistance information.

45. The apparatus of claim 41, wherein the first transmitting unit is further used for:

transmitting a specific long-term evolution, LTE, positioning protocol, LPP, message to the terminal, wherein the specific LPP message comprises the positioning integrity assistance information; or,
transmitting a positioning broadcast system message to the terminal, wherein the positioning broadcast system message comprises the positioning integrity assistance information.

46. The apparatus of claim 41, further comprising:

a third receiving unit, used for receiving a positioning integrity calculation result transmitted from the terminal,
wherein the positioning integrity calculation result comprises at least one of the following:

a positioning integrity protection level;
an integrity risk, IR, value for calculating positioning integrity; or,
an indication identifier of whether a positioning calculation is reliable.

47. An apparatus for determining positioning integrity, comprising:
a second transmitting unit, used for transmitting a *NewRadioPositioningProtocolAnnex,* NRPPa, message to a positioning server, wherein the NRPPa message comprises positioning integrity assistance information, and the positioning integrity assistance information is used to determine a positioning integrity calculation result.

48. The apparatus of claim 47, further comprising:
a receiving unit, used for receiving a second request message transmitted from the positioning server, wherein the second request message comprises indication information for requesting the positioning integrity assistance information.

49. A processor-readable storage medium, storing a computer program for causing a processor to perform the method for determining positioning integrity of any of claims 1 to 8.

50. A processor-readable storage medium, storing a computer program for causing a processor to perform the method for determining positioning integrity of any of claims 9 to 14.

51. A processor-readable storage medium, storing a computer program for causing a processor to perform the method for determining positioning integrity of any of claims 15 to 16.

Obtaining positioning integrity assistance information transmitted from a positioning server — 101

Determining a positioning integrity calculation result based on the positioning integrity assistance information — 102

FIG. 1

Transmitting positioning integrity assistance information to a terminal — 201

FIG. 2

Transmitting an NRPPa message to a positioning server — 301

FIG. 3

| Base station | | Positioning server |
| --- | --- | --- |

← NRPPa specific signalling (requesting downlink positioning integrity assistance data)

NRPPa specific signalling (downlink positioning integrity assistance data) →

FIG. 4

FIG. 5

FIG. 6

FIG. 7

FIG. 8

FIG. 9

1010 — Processor

Bus interface

Transceiver — 1000

1020 — Memory

**FIG. 10**

1110 — Processor

Bus interface

Transceiver — 1100

1120 — Memory

**FIG. 11**

Obtaining module — 1201

Determining module — 1202

**FIG. 12**

First transmitting module — 1301

**FIG. 13**

Second transmitting module — 1401

**FIG. 14**

**EP 4 543 051 A1**

<table>
<tr><td colspan="2" align="center"><strong>INTERNATIONAL SEARCH REPORT</strong></td><td>International application No.<br><br><strong>PCT/CN2023/099378</strong></td></tr>
</table>

**A.　CLASSIFICATION OF SUBJECT MATTER**

H04W4/02(2018.01)i；H04W 64/00(2009.01)i

According to International Patent Classification (IPC) or to both national classification and IPC

**B.　FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT, VEN, WPABS, ENTXT, VCN, 3GPP: 定位, 完好性, 辅助信息, 误差, 位置管理功能, 专用长期演进定位协议, 保护等级, 新空口定位协议, position, integrity, protection level, PL, gNB, LMF, LPP, NRPPa

**C.　DOCUMENTS CONSIDERED TO BE RELEVANT**

| Category* | Citation of document, with indication, where appropriate, of the relevant passages | Relevant to claim No. |
|---|---|---|
| X | WO 2021243617 A1 (OPPO GUANGDONG MOBILE TELECOMMUNICATIONS CO., LTD.) 09 December 2021 (2021-12-09)<br>　　claim 11, and description, pages 4-35 and 45-47 | 1-51 |
| X | CN 114125846 A (VIVO COMMUNICATION TECHNOLOGY CO., LTD.) 01 March 2022 (2022-03-01)<br>　　description, paragraphs [0025]-[0139] | 1-51 |
| X | VIVO. "R2-2009043,Integrity signaling and procedures"<br>*3GPP TSG-RAN WG2 Meeting #112-E,* 13 November 2020 (2020-11-13),<br>　　pages 1-4 | 1-51 |
| X | HUAWEI et al. "R2-2107499,Discussion on positioning integrity"<br>*3GPP TSG-RAN WG2 Meeting #115-e,* 27 August 2021 (2021-08-27),<br>　　pages 1-8 | 1-51 |
| A | CN 114630376 A (SHANGHAI HUAWEI TECHNOLOGIES CO., LTD.) 14 June 2022 (2022-06-14)<br>　　entire document | 1-51 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 September 2023** | **26 September 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**44**

**INTERNATIONAL SEARCH REPORT**

International application No.

**PCT/CN2023/099378**

**C.    DOCUMENTS CONSIDERED TO BE RELEVANT**

| Category* | Citation of document, with indication, where appropriate, of the relevant passages | Relevant to claim No. |
|---|---|---|
| A | WO 2022052053 A1 (NOKIA SHANGHAI BELL CO., LTD.) 17 March 2022 (2022-03-17) entire document | 1-51 |

Form PCT/ISA/210 (second sheet) (July 2022)

**INTERNATIONAL SEARCH REPORT**
Information on patent family members

International application No.

**PCT/CN2023/099378**

| Patent document cited in search report | | | Publication date (day/month/year) | Patent family member(s) | | | Publication date (day/month/year) |
|---|---|---|---|---|---|---|---|
| WO | 2021243617 | A1 | 09 December 2021 | CN | 115428480 | A | 02 December 2022 |
| CN | 114125846 | A | 01 March 2022 | WO | 2022033440 | A1 | 17 February 2022 |
| CN | 114630376 | A | 14 June 2022 | WO | 2022127503 | A1 | 23 June 2022 |
| WO | 2022052053 | A1 | 17 March 2022 | CN | 114173371 | A | 11 March 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022106819764